# EUROPEAN PATENT SPECIFICATION

(11) **EP 2 551 290 B1**
(45) Date of publication and mention of the grant of the patent: **29.04.2020**
(21) Application number: 11759416.8
(22) Date of filing: 23.03.2011
(51) Int. Cl.: C08G 73/02

(54) **CONDUCTIVE POLYMER, QUALITY CONTROL METHOD FOR CONDUCTIVE POLYMER AND METHOD FOR PURIFYING CONDUCTIVE POLYMER**
LEITFÄHIGES POLYMER, QUALITÄTSKONTROLLVERFAHREN FÜR DAS LEITFÄHIGE POLYMER UND VERFAHREN ZUR REINIGUNG DES LEITFÄHIGEN POLYMERS
POLYMÈRE CONDUCTEUR, MÉTHODE DE CONTRÔLE QUALITÉ ET MÉTHODE DE PURIFICATION DUDIT POLYMÈRE CONDUCTEUR

(30) Priority: 16.02.2011 JP 2011031388; 11.11.2010 JP 2010252717; 20.05.2010 JP 2010116483; 31.03.2010 JP 2010080734; 24.03.2010 JP 2010068159
(43) Date of publication of application: 30.01.2013
(73) Proprietor: Mitsubishi Chemical Corporation, Tokyo 100-8251 (JP)
(72) Inventor: SAKAI Takahiro, Yokohama-shi Kanagawa 230-0053 (JP); TAKAGI Tamae, Yokohama-shi Kanagawa 230-0053 (JP); YAMAZAKI Akira, Yokohama-shi Kanagawa 230-0053 (JP); HORIUCHI Yasushi, Yokohama-shi Kanagawa 230-0053 (JP); TAKAHARA Mamiko, Yokohama-shi Kanagawa 230-0053 (JP); NAKAYAMA Masaki, Yokohama-shi Kanagawa 230-0053 (JP); HOSHINO Manabu, Otake-shi Hiroshima 739-0693 (JP); IRIYAMA Hiroaki, Toyohashi-shi Aichi 440-8601 (JP); MOMOSE Fumino, Otake-shi Hiroshima 739-0693 (JP)
(74) Representative: Hoffmann Eitle
(86) International application number: PCT/JP2011/056930
(87) International publication number: WO 2011/118611

(56) References cited:
- EP-A1- 1 595 908
- WO-A1-2005/054338
- WO-A1-2005/108465
- WO-A1-2006/006459
- WO-A1-2006/087969
- JP-A- 4 268 331
- JP-A- 9 071 643
- JP-A- 10 259 249
- JP-A- 62 010 108
- JP-A- H10 110 030
- JP-A- 2005 536 595
- JP-A- 2010 202 836
- US-A- 5 821 344

## Description

The present invention relates to a conductive polymer.

### BACKGROUND ART

Doped polyaniline is well known as a conductive polymer.

As methods for producing a polyaniline, a method is suggested in which an aniline which is substituted with an acidic group such as a sulfonic acid group, or a carboxyl group (an acidic group-substituted aniline) is polymerized in a solution containing a basic compound (e.g., see Patent Documents 3 and 4).

Conventionally, an acidic group-substituted aniline alone is not easily polymerized. Therefore, it has been believed that it is difficult to achieve a polymer having high molecular weight. It is, however, possible to produce a polymer with a high molecular weight according to a method in which an acidic group-substituted aniline is polymerized in a solution containing a basic compound. A polyaniline obtained by this method has a high molecular weight. In addition, the polyaniline has excellent solubility in any aqueous solution ranging from acidic to alkaline.

In the method in which an acidic group-substituted aniline is polymerized in a solution containing a basic compound, however, side reactions occur simultaneously. Further, production of oligomer components as by-products, which is considered to be based on the side reactions, or the like is not totally inhibited. The by-products have been a factor of impurities contamination into a conductive polymer and have been a hindrance to improvement of conductivity.

As methods for solving the problems, for example, Patent Document 1 discloses a method for purifying impurities. In this method, the resultant conductive polymer is subjected to an acid treatment with a solution containing a protonic acid, or is washed with an organic solvent such as methanol or acetone after the acid treatment, and thus impurities are purified.

Patent Document 2 discloses a method for inhibiting impurities. In this method, an acidic group-substituted aniline is polymerized in a solution containing a basic compound. In this case, a solution containing an acidic group-substituted aniline and a basic compound is added dropwise to a solution of an oxidizing agent, which is a polymerization catalyst, and thus impurities are inhibited.

Patent Document 1: Japanese PatentApplication Laid-Open No. Hei 10-110030 A
Patent Document 2: Japanese Patent Application Laid-Open No.2000-219739 A
Patent Document 3: Japanese PatentApplication Laid-Open No. Hei 7-196791 A
Patent Document 4: Japanese PatentApplication Laid-Open No. Hei 7-324132 A

US 5,82,1344 describes a process for preparing an aqueous solution of self-acid-doped o-sulfonic acid ring-substituted polyaniline, which can be cast into freestanding films. The process involves dissolving a solid o-sulfonic acid ring-substituted polyaniline in an alkaline aqueous solution to form an aqueous solution of an undoped o-sulfonate ring-substituted polyaniline; purifying the aqueous solution of the undoped o-sulfonate ring-substituted polyaniline by subjecting it to a purifying treatment to remove excess alkali therefrom; and contacting the resulting purified aqueous solution with a H⁺-type ion-exchange resin to form an aqueous solution containing a self-acid-doped o-sulfonic acid ring-substituted polyaniline.

WO 2005/054338 describes a substituted polyaniline whose self-doped state can be controlled via complexation between boronic acid groups along the backbone with D-fructose in the presence of fluoride is described. This allows the formation of a water-soluble, self-doped conducting polymer under the polymerization conditions. In turn this facilitates the growth of polyaniline over a wider pH range.

EP 1 595 908 relates to a process of synthesizing conductive polymers from monomers substituted with amine group. The process provides simple synthesizing steps for the conductive polymers without using other additives such as stabilizers or emulsifiers.

WO 2005/108465 is directed to methods for preparing substantially defect-free, adjustable molecular-weight, aniline-based polymers at sub-ambient temperatures in the absence of salts effective for lowering the freezing point of the reacting solutions, and in the absence of inorganic acids containing chlorine atoms.

JP-H09-71643 describes a polyaniline having mainly a specific constituting unit and capable of producing a conductive membrane and a conductor expressing high conductivity and solubility and extremely excellent in applicability and membrane strength. The polymer has mainly a constituting aniline unit with four residues R¹ to R⁴, selected from H, a 1-4C alkyl, an alkoxy, an acidic group, hydroxyl, nitro or a halogen, wherein at least one is an acidic group.

### DISCLOSURE OF THE INVENTION

### PROBLEMS TO BE SOLVED BY THE INVENTION

When the conductive polymers obtained by the methods described in Patent Documents 1 and 2 are applied on a base material to form coating films, however, foreign materials are generated on the coating films with the passage of time. Therefore, there has been a problem that conductivity is decreased.

Further, the method described in Patent Document 1 is complicated, and purification of the conductive polymer is also insufficient. Therefore, particularly, sulfate ions, oligomers, unreacted monomers and the like remain as impurities. Accordingly, there has been a problem that conductivity and solubility are decreased.

The present invention has been made in view of the above circumstances. An object of the present invention is to provide a conductive polymer in which, when being formed into a coating film, foreign materials are difficult to be generated even the passage of time and a quality control method for a conductive polymer. Another object of the present invention is to provide a purification method to obtain a conductive polymer having high conductivity and solubility.

### SOLUTIONS TO THE PROBLEMS

[1] The conductive polymer of the present invention has a repeating unit which is represented by the following general formula (1), the content of the repeating unit of formula (1) being 50 to 100 mol%, based on all repeating units of the conductive polymer, and including an area ratio (Y/X) of 0.60 or less, which area ratio is calculated by an evaluation method comprising the following steps (I) to (VI):
   (I) a step of preparing a test solution by dissolving a conductive polymer in an eluent which is prepared to have a pH of 10 or more so that the conductive polymer has a solid concentration of 0.1% by mass;
   (II) a step of obtaining a chromatogram on the test solution by measuring molecular weight distribution using a polymer material evaluation equipment equipped with gel permeation chromatograph;
   (III) a step of converting retention times in the chromatogram obtained in the step (II) into molecular weights (M) in terms of sodium polystyrene sulfonate;
   (IV) a step of determining the area (X) of a region with a molecular weight (M) of 5000 Da or more, which molecular weight (M) is converted in terms of sodium polystyrene sulfonate;
   (V) a step of determining the area (Y) of a region with a molecular weight (M) of below 5000 Da, which molecular weight (M) is converted in terms of sodium polystyrene sulfonate; and
   (VI) a step of determining the area ratio (Y/X) between the area (X) and the area (Y): 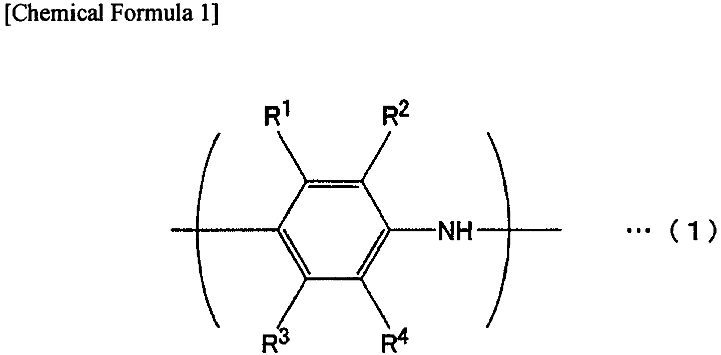 in the formula (1), one of R¹ to R⁴ is a linear or branched alkoxy group having 1 to 4 carbon atoms, one of the others is -SO₃- or -SO₃H, and the rest is H.

### EFFECTS OF THE INVENTION

According to the present invention, a conductive polymer is provided which has a high conductivity and solubility and, when being formed into a coating film, foreign materials are difficult to be generated.

### BRIEF DESCRIPTION OF THE DRAWINGS

Fig. 1 is an example of a chromatogram obtained by gel permeation chromatography in the step (II) of the evaluation method.
Fig. 2 is a micrograph showing an example of a coating film condition which is evaluated as "A" in evaluation of the generation of foreign materials.
Fig. 3 is a micrograph showing an example of a coating film condition which is evaluated as "B" in evaluation of the generation of foreign materials.
Fig. 4 is a micrograph showing an example of a coating film condition which is evaluated as "C" in evaluation of the generation of foreign materials.

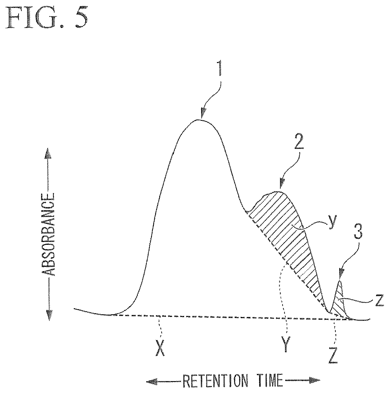

Fig. 5 is an example of a chromatogram obtained by gel permeation chromatography.
Fig. 6 is a schematic diagram showing a device used for membrane filtration in Examples.

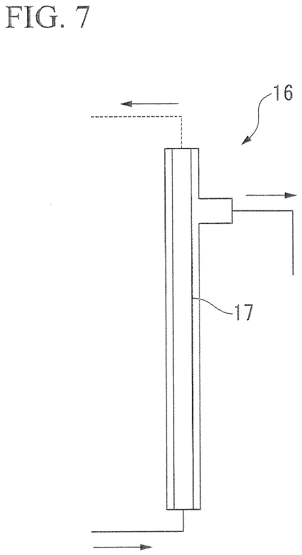

Fig. 7 is a schematic diagram (cross section diagram) of a filtration part using a ceramic membrane as a filtration membrane in Example 17.

### DESCRIPTION OF EMBODIMENTS

The present invention is described in detail below.

### [Conductive Polymer]

The conductive polymer of the present invention has a repeating unit which is represented by the following general formula (1).

As used herein, "conductivity" means having a volume resistivity of 10⁹ Ω· cm or less.

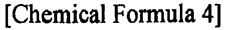

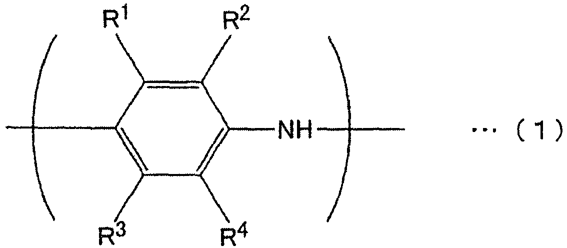

In the formula (1), one of R¹ to R⁴ is a linear or branched alkoxy group having 1 to 4 carbon atoms, one of the others is -SO₃- or -SO₃H, and the rest is H.

As used herein, an "acidic group" means a sulfonic acid group. In addition, a "salt" is any of an alkali metal salt, an ammonium salt and a substituted ammonium salt.

Accordingly, it is easy to produce a conductive polymer.

The conductive polymer contains 50 to 100 mol% of the repeating unit which is represented by the above general formula (1) of all repeating units constituting the conductive polymer (100 mol%). The content is particularly preferably 100 mol%. Accordingly, the conductive polymer has excellent solubility in water and an organic solvent regardless of pH.

The conductive polymer also has excellent conductivity.

As the conductive polymer, a compound with a structure which is represented by the following general formula (2) is preferred.

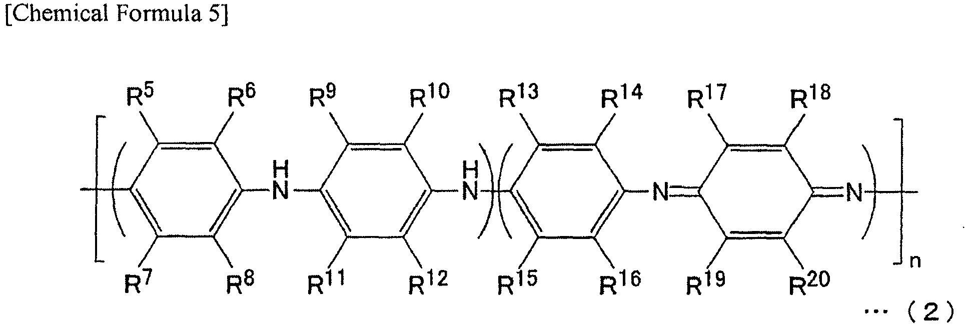

In the formula (2), R³ to R²⁰ are each independently an acidic group, -H, a linear or branched alkyl group having 1 to 24 carbon atoms, a linear or branched alkoxy group having 1 to 24 carbon atoms, a hydroxyl group, a nitro group, -F, -Cl,-Br or -I; and at least one of the aniline moieties is of formula (1) as defined above, such that the content of the repeating unit of formula (1) is 50 to 100 mol%, based on all repeating units of the conductive polymer. Additionally, n indicates the degree of polymerization.

Among the compounds with a structure which is represented by the above general formula (2), poly(2-sulfo-5-methoxy-1,4-iminophenylene) is particularly preferred. Accordingly, the conductive polymer has excellent solubility.

In addition, the conductive polymer of the present invention has an area ratio (Y/X) of 0.60 or less, which area ratio is calculated by an evaluation method including the following steps (I) to (VI):
(I) a step of preparing a test solution by dissolving a conductive polymer in an eluent which is prepared to have a pH of 10 or more so that the conductive polymer has a solid concentration of 0.1% by mass (step (I));
(II) a step of obtaining a chromatogram on the test solution by measuring molecular weight distribution using a polymer material evaluation equipment equipped with gel permeation chromatograph (step (II));
(III) a step of converting retention times in the chromatogram obtained in the step (II) into molecular weights (M) in terms of sodium polystyrene sulfonate (step(III));
(IV) a step of determining the area (X) of a region with a molecular weight (M) of 5000 Da or more, which molecular weight (M) is converted in terms of sodium polystyrene sulfonate (step (IV));
(V) a step of determining the area (Y) of a region with a molecular weight (M) of below 5000 Da, which molecular weight (M) is converted in terms of sodium polystyrene sulfonate (step (V)); and
(VI) a step of determining the area ratio (Y/X) between the area (X) and the area (Y) (step (VI)).

In the step (I), a test solution is prepared by dissolving a conductive polymer in an eluent.

The eluent is a solution in which a solute is dissolved in a solvent. Examples of the solvent include water, acetonitrile, alcohol (e.g., methanol and ethanol), dimethylformamide, dimethylsulfoxide, and mixed solvents of these compounds.

Examples of the solute include sodium carbonate, sodium hydrogen carbonate, sodium dihydrogen phosphate, trisodium phosphate, disodium hydrogen phosphate, glycine, sodium hydroxide, potassium chloride, and boric acid.

The eluent used in the step (I) has a pH of 10 or more. If the pH is below 10, measurement values may be shifted. Stable measurement results are obtained by using an eluent with a pH of 10 or more.

An eluent with a pH of 10 or more can be, for example, prepared as described below.

First, water (ultrapure water) and methanol are mixed so that water and methanol have a volume ratio of 8 : 2 to obtain a mixed solvent. To the resultant mixed solvent, sodium carbonate and sodium hydrogen carbonate are then added so that sodium carbonate and sodium hydrogen carbonate have solid concentrations of 20 mmol/L and 30 mmol/L, respectively, to obtain an eluent.

The eluent thus obtained has a pH of 10.8 at 25°C.

The pH of the eluent is a value measured using a pH meter with the temperature of the eluent maintained at 25°C.

The method for preparing an eluent with a pH of 10 or more is not restricted to the above-described method. For example, a solution of sodium carbonate with a solid concentration of 20 mmol/L and a solution of sodium hydrogen carbonate with solid concentration of 30 mmol/L are separately prepared using a mixed solvent of water and methanol (water: methanol = 8 : 2), and an eluent may be obtained by mixing these solutions.

If the conductive polymer is added to the eluent, the conductive polymer in a solid state may be added to and dissolved in the eluent as long as the solid concentration is 0.1% by mass. In addition, the conductive polymer is previously dissolved in a solvent to obtain a conductive polymer solution, and the conductive polymer solution may be added to the eluent. If the conductive polymer in the test solution has a solid concentration of 0.1% by mass, the pH buffer action of the eluent is fully exerted, and therefore stable measurement results are obtained.

In the case of using the conductive polymer solution, when the conductive polymer solution is added to the eluent, the solid concentration of the conductive polymer solution is not particularly restricted as long as the conductive polymer has a solid concentration of 0.1% by mass. The conductive polymer solution preferably has a solid concentration of 1.0% by mass or more. If the conductive polymer solution has a solid concentration of below 1.0% by mass, in the case of adding the conductive polymer solution to the eluent, the pH buffer action of the eluent is not fully exerted. Accordingly, the pH of the test solution becomes below pH 10. Further, measurement values are shifted and stable measurement values are difficult to be obtained.

Examples of the solvent to be used in the conductive polymer solution include solvents which are capable of dissolving conductive polymers described below. Among these, water is preferred.

In the step (II), molecular weight distribution on the test solution is measured by gel permeation chromatography (GPC) using a polymer material evaluation equipment.

The polymer material evaluation equipment is equipped with gel permeation chromatograph (GPC). By GPC, compounds (polymers, oligomers and monomers) can be isolated depending on molecular weight and analyzed.

The gel permeation chromatograph is connected with a detector such as a photodiode array detector or a UV detector.

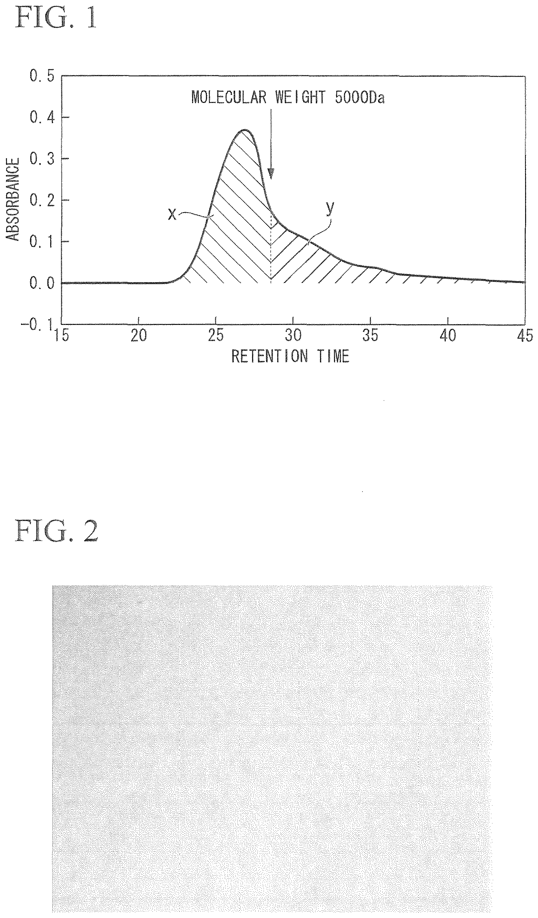

In the step (II), for example, a chromatogram as shown in Fig. 1 is obtained by GPC.

In the chromatogram shown in Fig. 1, the ordinate shows absorbance, and the abscissa shows retention time. In the chromatogram, high molecular weight bodies are detected at a relatively short retention time, while low molecular weight bodies are detected at a relatively long retention time.

In the step (III), the retention times in the chromatogram obtained in the step (II) are converted into molecular weights (M) in terms of sodium polystyrene sulfonate.

Specifically, sodium polystyrene sulfonates with peak top molecular weights of 206, 1030,4210, 13500, 33500, 78400, 158000 and 2350000 are used as standard samples. In the same way as for the test solution, each standard sample is dissolved in the eluent so that each of the standard samples has a solid concentration of 0.05% by mass to prepare a standard solution. However, only a standard sample with a peak top molecular weight of 206 is dissolved in the eluent so that the standard sample has a solid concentration of 0.0025% by mass to prepare a standard solution. In each standard solution, a relationship between the retention time and the molecular weight is determined by GPC to create a calibration curve. From the created calibration curve, the retention times in the chromatogram obtained in the step (II) are converted into the molecular weights (M) in terms of sodium polystyrene sulfonate.

In the step (IV), for example as shown in Fig. 1, the area (X) of a region (x) with a molecular weight (M) of 5000 Da or more is determined, which molecular weight (M) is converted in terms of sodium polystyrene sulfonate.

In addition, in the step (V), the area (Y) of a region (y) with a molecular weight (M) of below 5000 Da is determined.

In the step (VI), the area ratio (Y/X) between the area (X) and the area (Y) is determined.

The conductive polymer of the present invention has an area ratio (Y/X) of 0.60 or less, which area ratio is calculated by the above-described evaluation method. If the area ratio (Y/X) is 0.60 or less, foreign materials are difficult to be generated on a coating film formed from the conductive polymer even the passage of time, and therefore a decrease in conductivity can be inhibited. The reasons for this are considered as follows.

The conductive polymer contains oligomers which are produced as by-products in its production process or unreacted monomers as impurities. These oligomers or monomers do not appear immediately after a coating film is formed, but are gradually deposited with the passage of time. It is considered that the oligomers or monomers are generated on a coating film as foreign materials as described above.

The area (Y) is the area of a region with a molecular weight (M) of below 5000 Da, and low molecular weight bodies such as oligomers or monomers, which are a cause of foreign materials, mainly exist in the region. If the area ratio (Y/X) is 0.60 or less, the proportion of the low molecular weight bodies contained in the conductive polymer is small. Accordingly, foreign materials are difficult to be generated on a coating film formed from the conductive polymer even the passage of time.

A lower value of the area ratio (Y/X) indicates a smaller proportion of low molecular weight bodies contained in the conductive polymer. Consequently, a lower value of the area ratio (Y/X) is preferred. Specifically, preferred is 0.50 or less, and more preferred 0.40 or less.

In order to obtain the conductive polymer having an area ratio (Y/X) of 0.60 or less, a purification step may be introduced into its production process. As used herein, "purification" means removing monomers, oligomers, low molecular weight bodies or impurities.

First, a conductive polymer is synthesized by various synthetic methods such as chemical polymerization methods or electropolymerization methods. Specifically, at least one compound (monomer) selected from the group consisting of an acidic group-substituted aniline which is represented by the following general formula (3), and an alkali metal salt, an ammonium salt and a substituted ammonium salt thereof is polymerized using an oxidizing agent in the presence of a basic compound (a polymerization step).

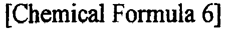

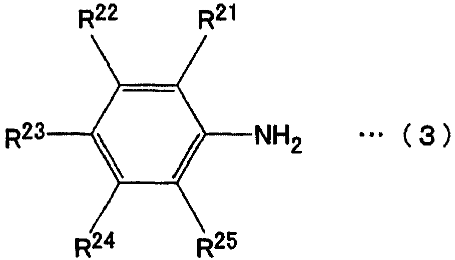

In the formula (1), one of R²¹ to R²⁵ is a linear or branched alkoxy group having 1 to 4 carbon atoms, one of the others is -SO₃- or -SO₃H, and the rest is H.

### (Monomer)

Examples of the acidic group-substituted aniline which is represented by the above general formula (3) include a alkoxy group-substituted aminobenzenesulfonic acids such as methoxyaminobenzenesulfonic acid, ethoxyaminobenzenesulfonic acid and propoxyaminobenzenesulfonic acid. A conductive polymer having particularly excellent conductivity and solubility is obtained by using these compounds.

These sulfonic acid group-substituted anilines may be used alone or two or more thereof may be mixed in any proportion and used.

Specific examples of positions and combinations of these substituents are shown in Table 1.

**[Table 1]**

| R²¹ | R²² | R²³ | R²⁴ | R²⁵ |
|---|---|---|---|---|
| A | B | H | H | H |
| A | H | B | H | H |
| A | H | H | B | H |
| A | H | H | H | B |
| H | A | B | H | H |
| H | A | H | B | H |
| H | A | H | H | H |
| B | A | H | H | B |
| H | H | A | B | H |
| H | H | A | H | B |
| B | H | A | H | H |
| H | B | A | H | H |
| H | H | H | A | B |
| H | H | B | A | H |
| H | B | H | A | H |
| B | H | H | A | H |
| H | H | H | B | A |
| H | H | B | H | A |
| H | B | H | H | A |
| B | H | H | H | A |

| | | | | |
|---|---|---|---|---|
| Abbreviations in Table 1 are as follows. A: represents a group selected from a sulfone group and an alkali metal salt, an alkaline earth metal salt, an ammonium salt and a substituted ammonium salt thereof; B: represents a group selected from C₁₋₄- alkoxy groups such as a methoxy group, an ethoxy group, a n-propoxy group, an iso-propoxy group, a n-butoxy group, a sec-butoxy group and a t-butoxy group; a hydroxy group; and H: represents a hydrogen atom. | | | | |

### (Basic compound)

As basic compounds, inorganic bases, ammonia, aliphatic amines, cyclic saturated amines or cyclic unsaturated amines are used.

Examples of the inorganic bases include salts of hydroxides such as sodium hydroxide, potassium hydroxide and lithium hydroxide. Among these, sodium hydroxide is preferred.

Examples of the aliphatic amines include a compound with a structure which is represented by the following general formula (4) and an ammonium hydroxide compound with a structure which is represented by the following general formula (5).

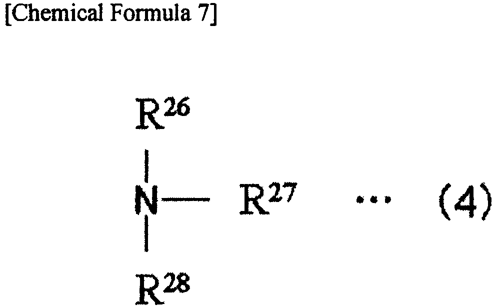

In the formula (4), R²⁶ to R²⁸ are each independently an alkyl group having 1 to 4 carbon atoms.

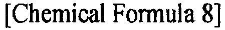

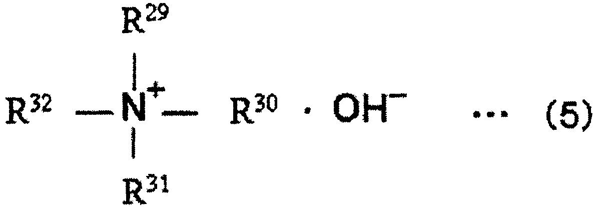

In the formula (5), R²⁹ to R³² are each independently a hydrogen atom or an alkyl group having 1 to 4 carbon atoms.

Examples of the cyclic saturated amines include piperidine, pyrrolidine, morpholine, piperazine and derivatives having these skeletons, and ammonium hydroxide compounds thereof.

Examples of the cyclic unsaturated amines include pyridine, α-picoline, β-picoline, γ-picoline, quinoline, isoquinoline, pyrroline and derivatives having these skeletons and ammonium hydroxide compounds thereof.

As the basic compounds, an inorganic base is preferred. Among basic compounds other than the inorganic bases, methylamine, dimethylamine, trimethylamine, ethylamine, diethylamine, triethylamine, ethylmethylamine, ethyldimethylamine, diethylmethylamine, pyridine, α-picoline, β-picoHne, or γ-picoline are preferably used.

A conductive polymer having high conductivity and high purity can be obtained by using the inorganic bases and these basic compounds.

These basic compounds may be used alone or two or more thereof may be mixed in any proportion and used.

The concentration of the basic compound is preferably 0.1 mol/L or more, more preferably 0.1 to 10.0 mol/L, and particularly preferably 0.2 to 8.0 mol/L. If the concentration of the basic compound is 0.1 mol/L or more, a conductive polymer can be obtained in high yield, while if the concentration of the basic compound is 10.0 mol/L or less, conductivity of a conductive polymer to be obtained tends to be improved.

The mass ratio of the above monomer and the above basic compound is preferably monomer: basic compound = 1 : 100 to 100 : 1, and more preferably 10 : 90 to 90 : 10. If the proportion of the basic compound is small, reactivity may be decreased or conductivity of a conductive polymer to be obtained may be decreased, while if the proportion of the basic compound is high, a probability that an acidic group in a conductive polymer to be obtained and the basic compound will form a salt is high. Accordingly, conductivity of the conductive polymer may be decreased.

### (Oxidizing agent)

The oxidizing agent is not restricted as long as the oxidizing agent has a standard electrode potential of 0.6 V or more. For example, it is preferred that peroxydisulfuric acids such as peroxydisulfuric acid, ammonium peroxydisulfate, sodium peroxydisulfate and potassium peroxydisulfate; or hydrogen peroxide be used.

These oxidizing agents may be used alone or two or more thereof may be mixed in any proportion and used.

The amount of the oxidizing agent to be used is preferably 1 to 5 mol, and more preferably 1 to 3 mol per mol of the monomer.

In the present invention, it is important to carry out polymerization in a system in which the oxidizing agent exists equal to or greater than the monomer in a molar ratio. As a catalyst, it is also effective to use a compound of a transition metal such as iron or copper in combination with the oxidizing agent.

### (Polymerization)

Examples of polymerization methods include a method in which a mixed solution of a monomer and a basic compound is added dropwise to an oxidizing agent solution; and further a method in which an oxidizing agent solution is added dropwise to a mixed solution of a monomer and a basic compound; and a method in which a mixed solution of a monomer and a basic compound and an oxidizing agent solution are simultaneously added dropwise in a reaction container.

Examples of solvents used for polymerization include water and a mixed solvent of water and a water-soluble organic solvent. The water-soluble organic solvent is not restricted as long as the solvent is mixed with water. Examples of the water-soluble organic solvent include methanol, ethanol, 2-propanol, acetone, acetonitrile, dimethylformamide, and dimethylacetamide.

When a mixed solvent is used as the solvent, the mixing ratio of water and the water-soluble organic solvent is optional, and for example is preferably water : water-soluble organic solvent = 1 : 100 to 100 : 1.

In the present invention, the pH in the reaction system during polymerization is preferably adjusted to pH 7 or less, and more preferably pH 6 or less. If the reaction system is pH 7 or less, a side reaction does not easily progress and the generation of impurities or oligomer components is inhibited. As a result, conductivity, and purity of a polymer to be obtained are improved.

The pH in the reaction system during polymerization can be adjusted by adding a protonic acid.

Examples of the protonic acid include mineral acids such as hydrochloric acid, nitric acid, sulfuric acid and borofluoric acid; super strong acids such as trifluoromethanesulfonic acid; organic sulfonic acids such as methanesulfonic acid, dodecylbenzenesulfonic acid, toluenesulfonic acid and camphorsulfonic acid; and polyacids such as polystyrene sulfonic acid, polyacrylic acid, polyvinyl sulfonic acid and poly-2-methylpropane-2-acrylamide sulfonic acid. Among these, hydrochloric acid, nitric acid, sulfuric acid and p-toluenesulfonic acid are preferred.

The amount of the protonic acid to be added is not particularly restricted as long as the oxidizing agent is not deposited. In particular, the molar ratio is preferably protonic acid: oxidizing agent = 0.01 : 100 to 50: 100, and more preferably 0.01 : 100 to 45 : 100. If the amount of the protonic acid to be added is within the above range, it is difficult to hinder reaction progress, and the generation of impurities or oligomer components is inhibited. As a result, conductivity, and purity of a polymer to be obtained are improved.

After polymerization, the solvent is generally collected by filtration using a filter such as a centrifuge. Further, if needed, the filtrate is washed with a washing liquid, and then dried. A polymer (a conductive polymer) is obtained in this manner.

Preferred washing liquids are, for example, alcohols such as methanol, ethanol, 2-propanol, 1 -propanol and t-butanol; acetone, acetonitrile, N,N-dimethylformamide, N-methylpyrrolidone and dimethylsulfoxide. By using these compounds, a high purity conductive polymer is obtained. In particular, methanol, ethanol, 2-propanol, acetone and acetonitrile are effective.

### [Method for purifying conductive polymer]

The conductive polymer thus obtained is purified to obtain the conductive polymer of the present invention (a purification step). The conductive polymer before purification is referred to as an "unpurified conductive polymer".

In the method for purifying a conductive polymer of the present invention, a conductive polymer having a repeating unit which is represented by the general formula (1) is purified. In addition, "purification" means removing substances other than the intended conductive polymer from a crude conductive polymer containing monomers, oligomers, low molecular weight bodies, or impurities. In the present invention, a relationship between surface resistivity and volume resistivity means "volume resistivity = surface resistivity × film thickness of measurement sample".

Examples of a method for purifying an unpurified conductive polymer include methods such as a membrane filtration method, an anion exchange method, and a treatment method with carbon materials (an activated carbon treatment method and a carbon nanotube (CNT) treatment method).

When the unpurified conductive polymer is purified by the above-described method, a state in which the unpurified conductive polymer is dissolved in a solvent such as water (a sample liquid) is used.

### (Membrane filtration method)

As filtration membranes used for membrane filtration, a permeable membrane is preferably used, and an ultrafiltration membrane is particularly preferred in view of removing unreacted monomers, low molecular weight substances (oligomers) and impurities.

Materials for the ultrafiltration membrane are not particularly restricted as long as the materials are generally used for the ultrafiltration membrane. Examples thereof include organic membranes such as cellulose, cellulose acetate, polysulphone, polypropylene, polyester, polyethersulphone and polyvinylidene fluoride, inorganic membranes such as a ceramic membrane, and organic-inorganic hybrid membranes. In particular, a ceramic membrane is suitable. The ceramic membrane has excellent solvent resistance and is easily subjected to maintenance such as chemical cleaning.

As the ultrafiltration membrane, in the case of the organic membrane, preferred is an ultrafiltration membrane with a molecular weight cutoff in a range of 1000 to 100000, more preferably a molecular weight cutoff in a range of 5000 to 50000, further preferably a molecular weight cutoff in a range of 10000 to 50000, and particular preferably a molecular weight cutoff in a range of 10000 to 30000. When the filtration membrane is the ceramic membrane, a pore diameter is preferably 100 nm or less and 1 nm or more, more preferably 50 nm or less and 2 nm or more, and further preferably 20 nm or less and 5 nm or more.

As the molecular weight cutoff of the ultrafiltration membrane increases, critical flux increases. Further, conductivity of a conductive polymer to be obtained after purification tends to increase, but its yield tends to decrease.

Similarly, as the value of the pore diameter in the ultrafiltration membrane increases, critical flux increases. Further, conductivity of a conductive polymer to be obtained after purification tends to increase, but its yield tends to decrease.

As a membrane filtration mode, a continuous cross flow mode is preferred in view of productivity. In the cross flow mode, a solution is allowed to flow along a permeable membrane. A part of the solution is permeated through the permeable membrane to concentrate (purify) the solution.

In the cross flow mode, the polymer solution can be repeatedly and continuously brought into contact with the permeable membrane, and therefore the degree of purification can be increased. Because the solvent in the polymer solution permeates through the permeable membrane, the polymer solution has high viscosity due to concentration in the course of purification. Accordingly, an operational problem may occur. In this case, the concentrated liquid is diluted to a suitable concentration by appropriately supplying a solvent (such as water) to the concentrated liquid, and therefore the purification treatment can be continued.

When the membrane filtration is carried out by the cross flow mode, the filtration pressure varies depending on ultrafiltration membranes and filtration devices, but is preferably about 0.01 to 1.0 MPa in view of productivity.

A filtration time is not particularly restricted, but if the other conditions are the same, as the time becomes longer, the degree of purification tends to become higher. As a result, conductivity of a conductive polymer to be obtained tends to increase.

A standard of the filtration time is preferably a time until, when molecular weight distribution of concentrated liquids each sampled at regular time intervals is evaluated using GPC (an abbreviation of Gel Permeation Chromatography), the peaks of residual unreacted monomers, low molecular weight substances (oligomers) with a molecular weight cutoff or less disappear.

Specifically, molecular weights are calculated from retention times in a chromatogram obtained by GPC in terms of sodium polystyrene sulfonate. The membrane filtration is preferably carried out until the area ratio (Y/X) between the area (X) of a region with 5000 Da or more and the area (Y) of a region with below 5000 Da of the molecular weights is 0.60 or less. If the area ratio (Y/X) is 0.60 or less, unreacted monomers, low molecular weight substances (oligomers), impurities are adequately removed, and therefore a conductive polymer with high conductivity is obtained.

Other than the method using GPC for the standard of the filtration time, the methods described below may be used. For example, concentrated liquids each sampled at regular time intervals are filtered using a simplified ultrafiltration kit. The solid contents of the filtrate (and the concentrated liquid: the concentrated liquid remaining on the membrane) are then measured. These values are used as the standard of the filtration time.

Specifically, it is preferred that membrane filtration be carried out until the solid content contained in the permeation liquid of the membrane filtration (filtrate after passing through the filtration membrane) is 10% by mass or less, more preferably 5% by mass or less, and further preferably 1% by mass or less. If the solid content is 10% by mass or less, unreacted monomers, low molecular weight substances (oligomers), impurities and the like are adequately removed, and therefore a conductive polymer with high conductivity is obtained.

The color of the permeation liquid is black to brawn at a solid content of about 10% by mass, reddish brawn to orange at a solid content of about 5% by mass, and yellow to clear at a solid content of 1% by mass or less. Accordingly, a visual check in the color of the permeation liquid can be also used as the standard of the filtration time. As the color of the permeation liquid, yellow to clear is preferred.

As the standard of the filtration time, it is preferred that the membrane filtration be continued until a coating film formed from the conductive polymer has a surface resistivity of 10⁶ Ω/sq. or less, more preferably 10⁵ Ω/sq. or less, and further preferably 10⁴ Ω_{/}sq. or less.

As the filtration time for the membrane filtration becomes longer, the proportion of unreacted monomers, low molecular weight substances (oligomers), and impurities decreases. Further, conductivity of the conductive polymer is improved. The conductivity is most improved at the time point when the peaks of unreacted monomers, low molecular weight substances (oligomers), and impurities disappear by measurement with GPC.

In the conductive polymer thus obtained, an acidic group is a group independently selected from the group consisting of a free acid, an alkali metal salt, an alkaline earth metal salt, an ammonium salt and a substituted ammonium salt. Accordingly, a polymer in which these groups are contained not only in a single state but also in a mixed state can be also obtained.

Specifically, when an acidic group-substituted aniline compound is polymerized in the presence of sodium hydroxide in the polymerization step, most of sulfone groups in a polymer to be isolated are converted to sodium salts. Similarly, when the polymerization is carried out in the presence of ammonia, the majority of sulfone groups are obtained in the form of ammonium salts. When the polymerization is carried out in the presence of trimethylamine, the majority of sulfone groups are obtained in the form of trimethylammonium salts. When the polymerization is carried out in the presence of quinoline, the majority of sulfone groups are obtained in the form of quinolinium salts.

A polymer in which a part or all of acidic groups form salts as described above is further subjected to a purification treatment before or after the purification step to obtain a high purity polymer, and therefore conductivity can be further improved.

### (Anion-exchange method)

After the above unpurified conductive polymer is dispersed or dissolved in a solvent, the obtained solution can be brought into contact with a strongly basic anion exchange resin to purify the conductive polymer.

As the solvent to disperse or dissolve the unpurified conductive polymer, water; alcohols such as methanol, ethanol, n-propanol, isopropanol, n-butanol, isobutanol, 2-butanol, 3-butanol, t-butanol, 1-pentanol, 3-methyl-1-butanol, 2-pentanol, n-hexanol, 4-methyl-2-pentanol, 2-ethylbutynol, benzylalcohol, furfuryl alcohol and tetrahydrofurfuryl alcohol; ketones such as acetone, methylethylketone, ethylisobutylketone and methylisobutylketone; polyhydric alcohol derivatives such as ethyleneglycol monomethylether, ethyleneglycol monoethylether, methoxymethoxy ethanol, propyleneglycol monoethylether and glyceryl monoacetate; amides such as dimethylformamide and dimethylacetamide; pyrrolidones such as N-methylpyrrolidone and N-ethylpyrrolidone; hydroxyesters such as methyl lactate, ethyl lactate, methyl β-methoxyisobutyrate and methyl α-hydroxyisobutyrate; and mixtures of these compounds are preferably used.

When the conductive polymer is dissolved or dispersed in the above-described solvent, the concentration thereof is preferably 0.1 to 20% by mass, and more preferably 0.1 to 10% by mass. If the concentration of the conductive polymer is below 0.1% by mass, it is difficult to recover the conductive polymer after purification, while if the concentration of the conductive polymer is above 20% by mass, viscosity is increased too much, and the contact with a strongly basic anion exchange resin is deteriorated. Accordingly, the effect of the ion exchange is difficult to be fully exerted.

The anion exchange resin has uncounted ion exchange groups (fixed ions) which are fixed on the surface or inside of a resin base. The ion exchange groups can selectively exchange (adsorb) oligomers or monomers contained in the unpurified conductive polymer to remove impurities. In addition, the ion exchange groups can selectively capture anions to be impurities by ion exchange. The anions can be also removed from the conductive polymer in this manner.

Examples of the anion exchange resins include a strongly basic anion exchange resin and a weakly basic anion exchange resin. Among these, a strongly basic anion exchange resin is preferred. The strongly basic anion exchange resin has high ion exchange capacity and oligomers or monomers can be adequately removed.

As used herein, "strongly basic" means a base with a large base dissociation constant, and specifically means a base which has an ionization degree of near 1 in an aqueous solution, quantitatively generates hydroxide ions and has a base dissociation constant (pKb) of pKb < 0 (Kb > 1), while "weakly basic" means a base with a low base dissociation constant, and specifically means a base which has an ionization degree of below 1 and near 0 in an aqueous solution, and has low capacity to remove hydrogen ions from other substances.

Examples of the strongly basic anion exchange resin include anion exchange resins having a quaternary ammonium salt, a tertiary sulfonium base, or a quaternary pyridinium base as an ion exchange group. Examples of commercially available products thereof include "ORLITE DS-2" manufactured by Organo Corporation; and "DIAION SA10A" manufactured by Mitsubishi Chemical Corporation.

On the other hand, examples of the weakly basic anion exchange resin include anion exchange resins having a primary to tertiary amino group as an ion exchange group. Examples of commercially available products thereof include "DIAION WA20" manufactured by Mitsubishi Chemical Corporation; and "Amberlite IRA67" manufactured by Organo Corporation.

### (Treatment method with carbon materials)

After the above unpurified conductive polymer is dispersed or dissolved in a solvent, the obtained solution can be brought into contact with a carbon material to purify the conductive polymer.

As the solvent to disperse or dissolve the unpurified conductive polymer, water; alcohols such as methanol, ethanol, n-propanol, isopropanol, n-butanol, isobutanol, 2-butanol, 3-butanol, t-butanol, 1-pentanol, 3-methyl-1-butanol, 2-pentanol, n-hexanol, 4-methyl-2-pentanol, 2-ethylbutynol, benzylalcohol, furfuryl alcohol and tetrahydrofurfuryl alcohol; ketones such as acetone, methylethylketone, ethylisobutylketone and methylisobutylketone; polyhydric alcohol derivatives such as ethyleneglycol monomethylether, ethyleneglycol monoethylether, methoxymethoxy ethanol, propyleneglycol monoethylether and glyceryl monoacetate; amides such as dimethylformamide and dimethylacetamide; pyrrolidones such as N-methylpyrrolidone and N-ethylpyrrolidone; hydroxyesters such as methyl lactate, ethyl lactate, methyl β-methoxyisobutyrate and methyl α-hydroxyisobutyrate; and mixtures of these compounds are preferably used.

When the conductive polymer is dissolved or dispersed in the above-described solvent, the concentration thereof is preferably 0.1 to 20% by mass, and more preferably 0.1 to 10% by mass. If the concentration of the conductive polymer is below 0.1% by mass, it is difficult to recover the conductive polymer after purification, while if the concentration of the conductive polymer is above 20% by mass, viscosity is increased too much, and the contact with a carbon material is deteriorated. Accordingly, the effect of purifying the conductive polymer is difficult to be fully exerted.

### <Carbon materials>

Examples of the carbon materials of the present invention include materials including carbon such as activated carbon, carbon black, graphite, graphene, a single-walled carbon nanotube, a multi-walled carbon nanotube, a carbon fiber, a carbon nanohom, a carbon nanowall or fullerene as a main component

### (Activated carbon)

In an activated carbon treatment method, activated carbon is used.

The activated carbon is a porous carbon substance having uncounted fine pores in the inside thereof. The activated carbon can selectively adsorb specific components to separate them.

The activated carbon is not particularly restricted as long as it can adsorb oligomers or monomers in a sample liquid to separate them from the sample liquid, and for example, "Seisei Shirasagi" manufactured by Japan EnviroChemicals, Ltd. is suitable.

### (Carbon nanotube)

The carbon nanotube is a tube which is formed by stacking two to several tens of layers of graphite-like carbon and has an outer diameter in the order of nm.

Examples of the carbon nanotube include general carbon nanotubes, i.e., a single-walled carbon nanotube, a multi-walled carbon nanotube, and a carbon nanotube in which these carbon nanotubes are formed into a coil. The multi-walled carbon nanotube is a tube in which single-walled carbon nanotubes are stacked in multiple layers concentrically.

Further, examples of the carbon nanotube also include a carbon nanohom in which one side of a carbon nanotube is closed, and a cup-shaped nanocarbon substance in which its head is holed, and further include fullerene and a carbon nanofiber which are analogs of carbon nanotubes.

Among these, a single-walled carbon nanotube and a multi-walled carbon nanotube are preferred. Accordingly, conductivity is further improved.

Examples of a method for producing the carbon nanotube include catalytic hydrogen reduction of carbon dioxide, an arc discharge method, a laser vaporization method, a chemical vapor deposition method (CVD method), a vapor deposition method, and a HiPco method. In the HiPco method, carbon monoxide is allowed to react together with an iron catalyst under high temperature and high pressure to grow carbon in a gas phase.

When the carbon nanotube is produced, it is preferred that the carbon nanotube be highly purified by various purification methods. Examples of the purification method include a cleaning method, a centrifugal separation method, a filtration method, an oxidation method, and a chromatograph method.

The carbon nanotube may be pulverized by ball type kneading machines such as a ball mill, a vibration mill, a sand mill and a roll mill. The carbon nanotube may be cut to have a short length by a chemical or physical treatment.

Examples of commercially available products of the carbon nanotube include HiPco single-wall carbon nanotubes and double-wall carbon nanotubes manufactured by Unidym, Inc; SWNT and MWNT manufactured by Iljin Nanotech Co. Ltd, Korea; C-100 and C-200 manufactured by CNT, CO., LTD.; carbon nanotubes manufactured by Shenzhen Nano-Tech Port Co., Ltd., China; and NC7100 manufactured by Nanocyl, S.A.

Examples of a method for producing the carbon nanotube include catalytic hydrogen reduction of carbon dioxide, an arc discharge method, a laser vaporization method, a chemical vapor deposition method (CVD method), a vapor deposition method, and a HiPco method. In the HiPco method, carbon monoxide is allowed to react together with an iron catalyst under high temperature and high pressure to grow carbon in a gas phase.

### <Contact method>

In the activated carbon treatment method and carbon nanotube method of the present invention, "contact" means that a conductive polymer dispersion or solution and a carbon material are allowed to be in a mixed state. After mixing the conductive polymer dispersion or solution and the carbon material, a treatment to accelerate the contact of the conductive polymer and the carbon material may be carried out by stirring or ultrasonic wave irradiation.

The amount of the carbon material to the conductive polymer is preferably 0.1 to 100 parts by mass, and more preferably 0.5 to 10 parts by mass per 100 parts by mass of the conductive polymer dispersion or solution. If the amount of the carbon material is below 0.5 parts by mass, impurities such as oligomers or monomers are difficult to be adequately removed, while if the amount of the carbon material is above 100 parts by mass, the amount of the carbon material is excessive for the conductive polymer dispersion or solution. Accordingly, it is difficult to recover a separation liquid or an eluent after the contact with the carbon material.

Examples of a method for bringing the conductive polymer liquid or dissolution liquid into contact with the carbon material include methods in which, after the conductive polymer dispersion or solution and the carbon material are put into a container, the obtained solution is stirred by a stirrer and rotated by a see-saw rotary rotor.

A time to bring the conductive polymer dispersion or solution into contact with the carbon material is preferably 0.1 hours or longer, and more preferably 0.5 hours or longer. If the contact time is shorter than 0.1 hours, impurities such as oligomers or monomers are difficult to be adequately removed.

The upper limit of the contact time is not particularly restricted, and can be appropriately adjusted depending on conditions such as the concentration of the conductive polymer dispersion or solution, the amount of the carbon material and contact temperature described below.

When the conductive polymer dispersion or solution is brought into contact with the carbon material, the temperature is preferably 10 to 100°C, and more preferably 10 to 60°C. If the contact temperature is below 10°C, viscosity of a separation liquid or an eluent is increased and it is difficult to be brought into contact with the carbon material. If the temperature is further lowered, the dispersion or solution may be frozen, while if the contact temperature is above 100°C, the dispersion or solution may be vaporized.

After the conductive polymer dispersion or solution is brought into contact with the carbon material, the carbon material can be removed by carrying out a general filtration method such as filtration with a filter, or centrifugal separation. Accordingly, a purified conductive polymer is obtained. As the filter for filtration, it is preferred that a filter with a fine pore size of 0.5 µm or less be used.

In the conductive polymer thus purified, impurities such as oligomers or monomers are adequately removed. Accordingly, the conductive polymer shows high conductivity and solubility.

The conductive polymer having an area ratio (Y/X) of 0.60 or less, which is described above, is obtained by purifying an unpurified conductive polymer with the above-described method.

As described above, a conductive polymer is obtained by polymerizing a monomer in the presence of a basic compound. Accordingly, a part of acidic groups in the conductive polymer, oligomer or monomer and the basic compound may form salts. In particular, when the acidic groups in the oligomer or monomer and the basic compound form salts, they easily appear on a coating film formed from the conductive polymer as foreign materials. In addition, when the acidic groups in the conductive polymer and the basic compound form salts, conductivity may be decreased.

When the unpurified conductive polymer is purified, the basic compound is basically removed with impurities such as oligomers or monomers. A desalting treatment may be, however, further carried out after the purification step (a desalting step). Accordingly, the basic compound can be further removed. Additionally, when the desalting step is carried out, the sample liquid after the purification step can be used as it is.

### (Desalting step)

Examples of a method for the desalting treatment include an ion exchange method, and specifically include an ion exchange method using a cation exchange resin, and an electrodialysis method.

In the case of the ion exchange method using a cation exchange resin, the amount of a sample liquid to the cation exchange resin is, for example when using a 5% conductive polymer aqueous solution, preferably up to 10 times, and more preferably up to 5 times the volume of the cation exchange resin.

Examples of the cation exchange resins include "DIAION SK1B" manufactured by Mitsubishi Chemical Corporation, and "Amberlite IR-120H" manufactured by Organo Corporation.

In the case of the electrodialysis method, an ion exchange membrane for the electrodialysis method is not particularly restricted, but it is preferred that an ion exchange membrane which is subjected to a treatment for selective permeability to monovalent ions and has a molecular weight cutoff of 300 or less be used. Accordingly, penetration by diffusion of impurities is inhibited. As the ion exchange membranes, for example, "NEOSEPTA CMK (a cation exchange membrane, molecular weight cutoff 300)", "NEOSEPTAAMX (an anion exchange membrane, molecular weight cutoff 300)" manufactured by ASTOM Corporation are suitable.

In addition, as the ion exchange membrane used for the electrodialysis method, a bipolar membrane may be used. The bipolar membrane is an ion exchange membrane having a structure obtained by laminating an anion exchange layer and a cation exchange layer. As the bipolar membrane, for example, "PB-1E/CMB" manufactured by ASTOM Corporation are suitable.

It is preferred that current density in electrodialysis be equal to or lower than critical current density. The voltage applied to the bipolar membrane is preferably 10 to 50 V, and more preferably 25 to 35 V.

By the above-described desalting treatment, the basic compound can be effectively removed from the conductive polymer. Accordingly, conductivity of a coating film formed from the conductive polymer is further improved.

The conductive polymer after the purification step and the desalting treatment is in a dissolved state in a solvent such as water. Therefore, a conductive polymer in a solid state is obtained by removing the solvent using an evaporator. In addition, the conductive polymer which is dissolved in a solvent may be used as a conductive polymer solution as it is.

In addition, the conductive polymer which is dissolved in a solvent after the purification step and the desalting treatment can be used for the above-described evaluation method as a conductive polymer solution.

The conductive polymer thus obtained preferably has a mass average molecular weight of 3000 to 1000000. If the mass average molecular weight is 3000 or more, conductivity, film forming properties and film strength are excellent, while if the mass average molecular weight is 1000000 or less, solubility in a solvent is excellent.

The mass average molecular weight of the conductive polymer is a value which is measured by carrying out in the above steps (I) to (III).

The conductive polymer is soluble. As used herein, "soluble" means that 0.1 g or more of the conductive polymer is uniformly dissolved in 10 g of water or an organic solvent (liquid temperature 25°C).

Examples of the solvent include water, an organic solvent and a mixed solvent of water and an organic solvent.

Examples of the organic solvent include alcohols such as methanol, ethanol, 2-propanol, 1-propanol and 1-butanol; ketones such as acetone, methylethylketone, ethylisobutylketone and methylisobutylketone; ethylene glycols such as ethylene glycol, ethylene glycol methyl ether and ethylene glycol mono-n-propyl ether; propylene glycols such as propylene glycol, propylene glycol methyl ether, propylene glycol ethyl ether, propylene glycol butyl ether and propylene glycol propyl ether; amides such as dimethylformamide and dimethylacetamide; pyrrolidones such as N-methylpyrrolidone and N-ethylpyrrolidone; and hydroxyesters such as methyl lactate, ethyl lactate, methyl β-methoxyisobutyrate and methyl α-hydroxyisobutyrate. These organic solvents may be used alone or two or more thereof may be used in combination. Among these organic solvents, however, there are some solvents in which the conductive polymer is not easily dissolved (e.g., ethanol etc.) when used alone. In this case, the solvents are mixed with water and are used as a mixed solvent.

The conductive polymer of the present invention is dissolved in the above-described solvent and the resultant solution is used as a conductive polymer solution (a conductive composition), or the conductive polymer dissolved in a solvent after the purification step and the desalting treatment is used as a conductive polymer solution. The conductive polymer solution is then applied on a base material and dried to form a coating film.

The base material on which the conductive polymer solution is applied is not particularly restricted, and polymer compounds, woods, paper materials, ceramics and films thereof or glass plates are used.

As a method for applying the conductive polymer solution, methods used for general coating materials can be utilized. For example, a spray coating method, a dip coating method, a roll coating method, a gravure coating method, a reverse coating method, a roll brush method, an air knife coating method, or a curtain coating method are used.

Further, it is preferred that a coating film formed from the conductive polymer be heated at 120 to 280°C. Accordingly, water resistance can be imparted to the coating film. More preferred temperature is 130 to 250°C, and if the heating temperature is below 120°C, water resistance of the coating film is difficult to be adequately obtained, while if the heating temperature is above 280°C, conductivity of the coating film is easily decreased.

As described above, the conductive polymer of the present invention has an area ratio (Y/X) of 0.60 or less. The area ratio (Y/X) is calculated by the above evaluation method. In addition, the conductive polymer of the present invention has a small proportion of impurities such as oligomers or monomers. Therefore, when the conductive polymer of the present invention is formed into a coating film, foreign materials are difficult to be generated even the passage of time. Consequently, excellent conductivity can be maintained in the conductive polymer of the present invention.

The conductive polymer of the present invention and the conductive polymer solution containing the same can be adapted to various types of antistatic agents; solid electrolytes for a functional polymer capacitor and additives thereof; primers for forming an electrolyte for a functional polymer capacitor; additives for a carbon layer of a functional polymer capacitor; electrodes for an electric double layer capacitor, a super capacitor, various types of cells and auxiliary agents thereof; members such as polyelectrolytes, polyelectrolyte membranes and fuel cells using the same, electrode layers, catalyst layers, gas diffusion layers, gas diffusion electrode layers and separators; EMI shields; chemical sensors; display elements; non-linear materials; anticorrosives; adhesives; materials for fibers and spinning; antistatic coating materials; anticorrosive coating materials; electrodeposition coating materials; plating primers; conductive primers for electrostatic coating materials; electric anticorrosion; electricity storage capacity of cells; industrial packaging materials for semiconductors, electric and electronic components; transparent conductive resin plates used for clean room for producing semiconductors; antistatic films such as films for overhead projectors and slide films for electrophotographic recording materials; magnetic recording antistatic tapes such as transparent conductive films, audiotapes, videotapes, tapes for computers and floppy disks; antistatic agents for acid dyeable fibers such as wool and nylon; antistatic agents for liquid crystal display polarizing plates; antistatic agents for protective films for polarizing plates; antistatic agents for release films of electronic components; LSI wiring of electronic devices; display protection plates for input or display device surfaces, front plates, antistatic materials, transparent electrodes, and transparent electrode films for flat panel displays such as transparent touch panels, electroluminescence displays and liquid crystal displays; or luminescent materials, buffer materials, electron transporting materials, hole transporting materials and fluorescent materials forming organic electroluminescent elements; thermal transfer sheets, transfer sheets, thermal transfer receiving sheets and receiving sheets; transparent electrodes of organic thin film solar cells, counter electrodes for dye-sensitized solar cells and auxiliary agents thereof; positive and negative electrode materials for lithium ion batteries and auxiliary agents thereof; and dispersibility improvers of carbon materials.

### [Quality control method for conductive polymer]

The quality control method for the above-described conductive polymer (hereinafter simply referred to as "quality control method") is a method for selecting a conductive polymer having an area ratio (Y/X) of 0.60 or less, which area ratio is calculated by the evaluation method including the above steps (I) to (VI). That is, the conductive polymer having an area ratio (Y/X) of 0.60 or less is evaluated as good. A conductive polymer having an area ratio (Y/X) of above 0.60 is evaluated as failure. The conductive polymer evaluated as good is regarded as the conductive polymer of the present invention.

An object which is subjected to quality control is a conductive polymer having a repeating unit which is represented by the general formula (1).

The conductive polymer selected by the quality control method of the present invention has an area ratio (Y/X) of 0.60 or less. That is, the conductive polymer has a small proportion of impurities such as oligomers or monomers. Therefore, when the conductive polymer is formed into a coating film, foreign materials are difficult to be generated even the passage of time. Consequently, excellent conductivity can be maintained.

As described above, if the purification step is insufficient in the production process of the conductive polymer, impurities such as oligomers or monomers are not adequately removed. Consequently, a conductive polymer which is unsuitable for an electric conductor is obtained. Even in this case, an unsuitable conductive polymer can be removed in advance by the quality control method of the present invention. Therefore, when the conductive polymer is formed into a coating film, foreign materials are difficult to be generated even the passage of time. Consequently, a conductive polymer in which excellent conductivity can be maintained can be stably provided by the present invention.

The conductive polymer evaluated as failure may be repeatedly subjected to the purification step until it is evaluated as good. Accordingly, conductive polymers to be produced can be utilized without waste.

### EXAMPLES

The present invention is described in detail below by way of examples. It should be noted, however, that the present invention is not limited thereto.

The evaluation and measurement methods and the polymerization method of a conductive polymer in Examples and Comparative Examples are as follows.

### [Conductive polymer purified by membrane filtration method, ion exchange method and treatment method with carbon materials]

### <Evaluation and measurement>

### (Calculation of area ratio (Y/X))

First, water (ultrapure water) and methanol were mixed so that water and methanol had a volume ratio of 8 :2 to prepare a mixed solvent. Sodium carbonate and sodium hydrogen carbonate were added to the mixed solvent so that sodium carbonate and sodium hydrogen carbonate had solid concentrations of 20 mmol/L and 30 mmol/L, respectively, to prepare an eluent. The resultant eluent had a pH of 10.8 at 25°C.

A test solution was prepared by dissolving a conductive polymer in the eluent so that the conductive polymer had a solid concentration of 0.1% by mass (step (I)).

A chromatogram on the resultant test solution was obtained by measuring molecular weight distribution using a polymer material evaluation equipment ("Waters Alliance 2695, 2414 (refractometer) and 2996 (PDA)" manufactured by Waters Corporation) (step (II)). The polymer material evaluation equipment is equipped with gel permeation chromatograph connecting with a photodiode array (PDA) detector.

Thereafter, retention times in the resultant chromatogram were converted into molecular weights (M) in terms of sodium polystyrene sulfonate (step (III)). Specifically, sodium polystyrene sulfonates with peak top molecular weights of 206, 1030, 4210, 13500, 33500, 78400, 158000 and 2350000 were used as standard samples. In the same way as for the test solution, each standard sample was dissolved in the eluent so that each of the standard samples had a solid concentration of 0.05% by mass to prepare a standard solution. However, only a standard sample with a peak top molecular weight of 206 was dissolved in the eluent so that the standard sample had a solid concentration of 0.0025% by mass to prepare a standard solution. In each standard solution, a relationship between the retention time and the molecular weight was determined by GPC to create a calibration curve. From the created calibration curve, the retention times in the chromatogram obtained in the step (II) were converted into the molecular weights (M) in terms of sodium polystyrene sulfonate.

The area (X) of a region with a molecular weight (M) of 5000 Da or more and the area (Y) of a region with that of below 5000 Da were each determined (steps (IV) and (V)).

The area ratio (Y/X) between the area (X) and the area (Y) was determined (step (VI)).

### (Evaluation of generation of foreign materials)

On a glass substrate with 5 cm × 5 cm, the conductive polymer solution was applied by spin coating (2000 rpm × 60 sec). The glass substrate was heated at 100°C for 2 minutes on a hot plate to obtain a test piece in which a coating film with a thickness of 0.1 µm was formed on the glass substrate.

The resultant test piece was left at 23°C. The states of the coating film at 1 week and 3 months after forming the coating film were observed using a microscope (magnification: 1000 ×). The number of generation of foreign materials per mm² of the coating film was counted and evaluated by the following evaluation criteria.

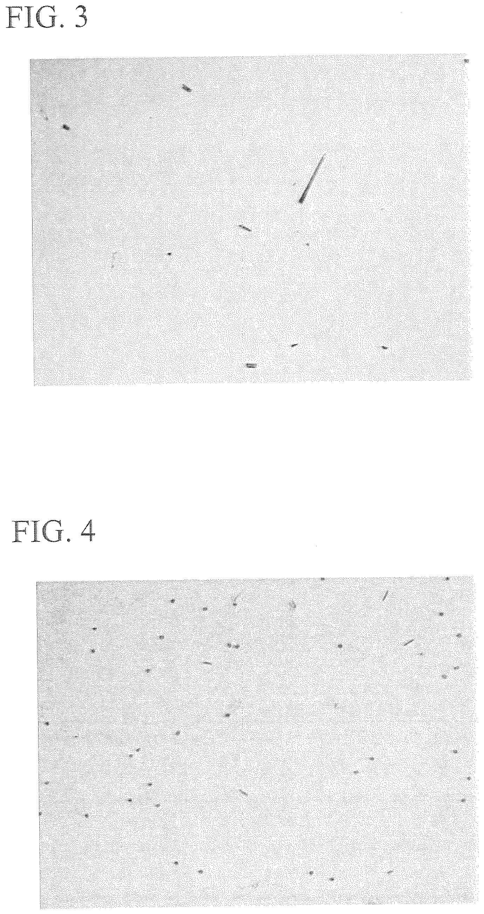

A foreign material with a longest diameter of 1 µm or more was counted. An example of the state of the coating film evaluated as "A" is shown in Fig. 2, an example of the state of the coating film evaluated as "B" is shown in Fig. 3 and an example of the state of the coating film evaluated as "C" is shown in Fig. 4, respectively.
A: 0 foreign materials;
B: 1 to 5 foreign materials;
C: 6 to 50 foreign materials;
D: 51 to 100 foreign materials; and
E: above 100 foreign materials.

### (Measurement of surface resistivity)

A test piece was made in the same manner as in the evaluation of the generation of foreign materials.

A surface resistivity (an initial value) of the resultant test piece was measured by a resistivity meter ("Loresta GP" manufactured by Mitsubishi Chemical Analytech Co., Ltd.) equipped with an in-line four point probe.

### <Polymerization of conductive polymer>

### (Polymerization Example 1)

100 mmol of 2-aminoanisole-4-sulfonic acid was dissolved in 50 mL of a solution of 2 mol/L triethylamine in water/acetonitrile (5 : 5) to obtain a monomer solution. 100 mmol of ammonium peroxydisulfate was dissolved in 80 mL of a solution of water/acetonitrile (5 : 5), and 0.5 g of concentrated sulfuric acid (98% by mass) was further added thereto to obtain an oxidizing agent solution.

While cooling the oxidizing agent solution to 5°C, the monomer solution was then added dropwise thereto over one hour. The maximum temperature achieved during this reaction was 20°C. After completion of the addition, the resultant mixture was further stirred at room temperature for 12 hours, and a reaction product was then collected by filtration using a centrifugal filter. The reaction product was further washed with methanol and was dried. Thus, a polymer (an unpurified conductive polymer) 1A powder in an amount of about 13 g was obtained.

The "room temperature" indicates 23°C.

### (Polymerization Example 2)

100 mmol of 2-aminoanisole-4-sulfonic acid was dissolved in 50 mL of a solution of 2 mol/L triethylamine in water/acetonitrile (4 : 6) to obtain a monomer solution. 100 mmol of ammonium peroxydisulfate was dissolved in 80 mL of a solution of water/acetonitrile (4 : 6), and 0.5 g of concentrated sulfuric acid (98% by mass) was further added thereto to obtain an oxidizing agent solution.

In the same manner as in Polymerization Example 1 except that the resultant monomer solution and oxidizing agent solution were used, a polymer (an unpurified conductive polymer) 1B powder in an amount of about 11 g was obtained.

### (Polymerization Example 3)

The same monomer solution and oxidizing agent solution as in Polymerization Example 1 were used. While cooling the oxidizing agent solution to 5°C, the monomer solution was added dropwise thereto over one hour. The maximum temperature achieved during this reaction was 20°C. After completion of the addition, the resultant mixture was further stirred at room temperature for 12 hours. Thus, a polymer (an unpurified conductive polymer) solution 1C was obtained.

### [Example 1]

The polymer 1A obtained in Polymerization Example 1 was dissolved in ultrapure water (Millipore) so that the polymer had a solid concentration of 2% by mass to obtain 300 g of an aqueous solution.

A filtration device in which two cross flow ultrafiltration units ("Vivaflow 50" manufactured by Sartorius Stedim Japan K.K.) were connected in series was used. The ultrafiltration unit is equipped with a cross flow ultrafiltration membrane with a molecular weight cutoff of 10000 Da. The resultant aqueous solution was subjected to recirculation filtration under conditions of a filtration time of 70 minutes and a filtration pressure of 0.4 MPa. The unpurified conductive polymer was purified and a solution which had not passed through the filtration membrane was collected as a conductive polymer solution 1A-1.

A part of the resultant conductive polymer solution 1A-1 was collected, and dissolved in the eluent which had been prepared previously so that the conductive polymer had a solid concentration of 0.1% by mass to prepare a test solution. The area ratio (Y/X) of the test solution was calculated. The result is shown in Table 2.

With respect to the conductive polymer solution 1A-1, the generation of foreign materials was evaluated and a surface resistivity was measured. These results are shown in Table 2.

### [Example 2]

The polymer 1A obtained in Polymerization Example 1 was dissolved in ultrapure water (Millipore) so that the polymer had a solid concentration of 2% by mass to obtain 300 g of an aqueous solution.

In a pressurized ultrafiltration unit ("stirring type ultra holder" manufactured by Advantec Toyo Kaisha, Ltd.), the resultant aqueous solution was applied. The pressurized ultrafiltration unit is equipped with a pressurized ultrafiltration membrane with a molecular weight cutoff of 10000 Da ("ultrafilter Q0100" manufactured by Advantec Toyo Kaisha, Ltd.). The resultant aqueous solution was filtered with applying a pressure of 0.35 MPa until a volume of the aqueous solution became 150 g. After that, the pressure was released. 150 g of ultrapure water was added to the aqueous solution, and filtered with applying pressure again. This operation was repeated three times to purify the unpurified conductive polymer. In addition, a solution which had not passed through the filtration membrane was collected as a conductive polymer solution 1A-2.

With respect to the resultant conductive polymer solution 1A-2, an area ratio (Y/X) was calculated in the same manner as in Example 1. The generation of foreign materials was evaluated and a surface resistivity was measured. These results are shown in Table 2.

### [Example 3]

2 parts by mass of the polymer 1A obtained in Polymerization Example 1 was dissolved in 98 parts by mass of water at room temperature to obtain an aqueous solution. 10 parts by mass of a strongly anion exchange resin ("ORLITE DS-2" manufactured by Organo Corporation) was added to 100 parts by mass of the aqueous solution. The mixed liquid was rotated at a rotation speed of 50 rpm at room temperature for one hour using a variable mix rotor (VMR-3R). Thus, the unpurified conductive polymer was purified.

Thereafter, the mixed liquid was filtered with a filter to remove the strongly anion exchange resin and a conductive polymer solution 1A-3 was obtained.

With respect to the resultant conductive polymer solution 1A-3, an area ratio (Y/X) was calculated in the same manner as in Example 1. The generation of foreign materials was evaluated and a surface resistivity was measured. These results are shown in Table 2.

### [Example 4]

2 parts by mass of the polymer 1A obtained in Polymerization Example 1 was dissolved in 98 parts by mass of water at room temperature to obtain an aqueous solution. 1 part by mass of activated carbon ("Seisei Shirasagi" manufactured by Japan EnviroChemicals, Ltd.) was added to 100 parts by mass of the aqueous solution. The mixed liquid was rotated at a rotation speed of 50 rpm at room temperature for one hour using a variable mix rotor (VMR-3R) to purify the unpurified conductive polymer.

Thereafter, the mixed liquid was filtered with a filter to remove the activated carbon. Thus, a conductive polymer solution 1A-4 was obtained.

With respect to the resultant conductive polymer solution 1A-4, an area ratio (Y/X) was calculated in the same manner as in Example 1. The generation of foreign materials was evaluated and a surface resistivity was measured. These results are shown in Table 2.

### [Example 5]

2 parts by mass of the polymer 1A obtained in Polymerization Example 1 was dissolved in 98 parts by mass of water at room temperature to obtain an aqueous solution. 1 part by mass of a carbon nanotube (CNT, "VGCF" manufactured by Showa Denko K.K.) was added to 100 parts by mass of the aqueous solution. The mixed liquid was rotated at a rotation speed of 50 rpm at room temperature for one hour using a variable mix rotor (VMR-3R). Thus, the unpurified conductive polymer was purified.

Thereafter, the mixed liquid was filtered with a filter to remove the CNT. Thus, a conductive polymer solution 1A-5 was obtained.

With respect to the resultant conductive polymer solution 1A-5, an area ratio (Y/X) was calculated in the same manner as in Example 1. The generation of foreign materials was evaluated and a surface resistivity was measured. These results are shown in Table 2.

### [Example 6]

The unpurified conductive polymer was purified in the same manner as in Example 1 except that the polymer 1B obtained in Polymerization Example 2 was used. A solution which had not passed through the filtration membrane was collected as a conductive polymer solution 1B-1. With respect to the conductive polymer solution 1B-1, an area ratio (Y/X) was calculated in the same manner as in Example 1. The generation of foreign materials was evaluated and a surface resistivity was measured. These results are shown in Table 2.

### [Example 7]

The unpurified conductive polymer was purified in the same manner as in Example 1 except that the polymer solution 1C obtained in Polymerization Example 3 was used and ultrapure water (Millipore) was further added thereto so that the polymer had a solid concentration of 2% by mass. A solution which had not passed through the filtration membrane was collected as a conductive polymer solution 1C-1. With respect to the conductive polymer solution 1C-1, an area ratio (Y/X) was calculated in the same manner as in Example 1. The generation of foreign materials was evaluated and a surface resistivity was measured. These results are shown in Table 2.

### [Example 8]

An acidic cation exchange resin ("Amberlite IR-120H" manufactured by Organo Corporation) was filled into a column so that the acidic cation exchange resin would be 10 parts by mass per 100 parts by mass of the conductive polymer solution 1A-1 obtained in Example 1. The conductive polymer solution 1A-1 was passed through the column at a speed of SV = 5 to desalt the solution. Thus, a conductive polymer solution 1A-6 was obtained. Additionally, 1 SV (Sverdrup) is 1 × 10⁶ m³/s (=1 GL/s).

With respect to the resultant conductive polymer solution 1A-6, an area ratio (Y/X) was calculated in the same manner as in Example 1. The generation of foreign materials was evaluated and a surface resistivity was measured. These results are shown in Table 2.

### [Example 9]

Desalting was carried out in the same manner as in Example 8 except that the conductive polymer solution 1A-2 obtained in Example 2 was used. Thus, a conductive polymer solution 1A-7 was obtained.

With respect to the resultant conductive polymer solution 1A-7, an area ratio (Y/X) was calculated in the same manner as in Example 1. The generation of foreign materials was evaluated and a surface resistivity was measured. These results are shown in Table 2.

### [Example 10]

Desalting was carried out in the same manner as in Example 8 except that the conductive polymer solution 1A-3 obtained in Example 3 was used. Thus, a conductive polymer solution 1A-8 was obtained.

With respect to the resultant conductive polymer solution 1A-8, an area ratio (Y/X) was calculated in the same manner as in Example 1. The generation of foreign materials was evaluated and a surface resistivity was measured. These results are shown in Table 2.

### [Example 11]

Desalting was carried out in the same manner as in Example 8 except that the conductive polymer solution 1A-4 obtained in Example 4 was used. Thus, a conductive polymer solution 1A-9 was obtained.

With respect to the resultant conductive polymer solution 1A-9, an area ratio (Y/X) was calculated in the same manner as in Example 1. The generation of foreign materials was evaluated and a surface resistivity was measured. These results are shown in Table 2.

### [Example 12]

Desalting was carried out in the same manner as in Example 8 except that the conductive polymer solution 1A-5 obtained in Example 5 was used. Thus, a conductive polymer solution 1A-10 was obtained.

With respect to the resultant conductive polymer solution 1A-10, an area ratio (Y/X) was calculated in the same manner as in Example 1. The generation of foreign materials was evaluated and a surface resistivity was measured. These results are shown in Table 2.

### [Example 13]

Desalting was carried out in the same manner as in Example 8 except that the conductive polymer solution 1B-1 obtained in Example 6 was used. Thus, a conductive polymer solution 1B-2 was obtained.

With respect to the resultant conductive polymer solution 1B-2, an area ratio (Y/X) was calculated in the same manner as in Example 1. The generation of foreign materials was evaluated and a surface resistivity was measured. These results are shown in Table 2.

### [Example 14]

Desalting was carried out in the same manner as in Example 8 except that the conductive polymer solution 1C-1 obtained in Example 7 was used. Thus, a conductive polymer solution 1C-2 was obtained.

With respect to the resultant conductive polymer solution 1C-2, an area ratio (Y/X) was calculated in the same manner as in Example 1. The generation of foreign materials was evaluated and a surface resistivity was measured. These results are shown in Table 2.

### [Comparative Example 1]

The polymer 1A obtained in Polymerization Example 1 was dissolved in ultrapure water (Millipore) so that the polymer had a solid concentration of 2% by mass to obtain 300 g of an aqueous solution. The aqueous solution was used as a conductive polymer solution 1D-1.

With respect to the conductive polymer solution 1D-1, an area ratio (Y/X) was calculated in the same manner as in Example 1. The generation of foreign materials was evaluated and a surface resistivity was measured. These results are shown in Table 2.

### [Comparative Example 2]

The unpurified conductive polymer (polymer 1A) was purified in the same manner as in Example 1. The solution which had passed through the filtration membrane was collected as a conductive polymer solution 1D-2.

With respect to the conductive polymer solution 1D-2, an area ratio (Y/X) was calculated in the same manner as in Example 1. The generation of foreign materials was evaluated and a surface resistivity was measured. These results are shown in Table 2.

### [Comparative Example 3]

The polymer 1B obtained in Polymerization Example 2 was dissolved in ultrapure water (Millipore) so that the polymer had a solid concentration of 2% by mass to obtain 300 g of an aqueous solution. The aqueous solution was used as a conductive polymer solution 1D-3.

With respect to the conductive polymer solution 1D-3, an area ratio (Y/X) was calculated in the same manner as in Example 1. The generation of foreign materials was evaluated and a surface resistivity was measured. These results are shown in Table 2.

### [Comparative Example 4]

Desalting was carried out in the same manner as in Example 8 except that the conductive polymer solution 1D-2 obtained in Comparative Example 2 was used. Thus, a conductive polymer solution 1D-4 was obtained.

With respect to the resultant conductive polymer solution 1D-4, an area ratio (Y/X) was calculated in the same manner as in Example 1. The generation of foreign materials was evaluated and a surface resistivity was measured. These results are shown in Table 2.

**[Table 2]**

| | Type of unpurified conductive polymer | Execution of purification step | Execution of desalting after purification | Area ratio (Y/X) | Evaluation of generation of foreign materials | | Surface resistivity (Ω/Sq.) |
|---|---|---|---|---|---|---|---|
| | | | | | 1 week later | 3 months later | |
| Example 1 | Polymer 1A | Yes | No | 0.47 | B | B | 1.0×10⁶ |
| Example 2 | Polymer | Yes | No | 0.52 | B | B | 1.1×10⁶ |
| Example 3 | Polymer 1A | Yes | No | 0.48 | B | B | 1.0×10⁶ |
| Example 4 | Polymer | Yes | No | 0.56 | B | B | 1.5×10⁶ |
| Example 5 | Polymer 1A | Yes | No | 0.55 | B | B | 1.5× 10⁶ |
| Example 6 | Polymer 1B | Yes | No | 0.45 | B | B | 9.0×10⁵ |
| Example 7 | Polymer solution 1C | Yes | No | 0.39 | B | B | 2.0×10⁵ |
| Example 8 | Polymer | Yes | Yes | 0.47 | A | B | 1.0×10⁵ |
| Example 9 | Polymer 1A | Yes | Yes | 0.52 | A | B | 1.1×10⁵ |
| Example 10 | Polymer | Yes | Yes | 0.48 | A | B | 1.0×10⁵ |
| Example 11 | Polymer 1A | Yes | Yes | 0.56 | A | B | 1.5×10⁵ |
| Example 12 | Polymer | Yes | Yes | 0.55 | A | B | 1.5×10⁵ |
| Example 13 | Polymer B | Yes | Yes | 0.45 | A | B | 9.0×10⁴ |
| Example 14 | Polymer Solution 1C | Yes | Yes | 0.39 | A | B | 2.0×10⁴ |
| Comparative Example 1 | Polymer 1A | No | No | 0.76 | C | D | 3.0×10⁶ |
| Comparative Example 2 | Polymer 1A | Yes | No | 3.00 | E | E | 5.0×10⁸ |
| Comparative Example 3 | Polymer 1A | No | No | 0.64 | C | D | 2.5×10⁶ |
| Comparative Example 4 | Polymer 1A | Yes | Yes | 3.00 | D | D | 5.0×10⁷ |

| | | | | | | | |
|---|---|---|---|---|---|---|---|
| * In Comparative Examples 2 and 4, evaluation data for filtrate after purification are shown. | | | | | | | |

As is apparent from Table 2, in the conductive polymer solution obtained in each Example, the number of generation of foreign materials was 5 or less per mm² of a coating film even at 3 months after forming the coating film. That is, the generation of foreign materials was inhibited. In particular, in the case of Examples 8 to 14 in which desalting was carried out after purification of the unpurified conductive polymers, foreign materials were not generated until 1 week after forming coating films.

In addition, a coating film formed from the conductive polymer solution obtained in each Example had a low surface resistivity and showed high conductivity. In particular, in the case of Examples 8 to 14 in which desalting was carried out after purification of the unpurified conductive polymers, surface resistivity were further decreased and higher conductivity could be exerted.

On the other hand, in the conductive polymer solutions obtained in Comparative Examples 1 and 3 in which the unpurified conductive polymers were not purified, foreign materials were generated at 1 week after forming coating films. The number of the foreign materials was further increased at 3 months after forming the coating films. This is considered that oligomers or monomers contained in the conductive polymers appeared as foreign materials. In addition, in Comparative Examples 1 and 3, surface resistivities of the coating films were relatively higher than that of each Example.

The conductive polymer solution obtained in Comparative Example 2 corresponds to a filtrate (a solution which passed through the filtration membrane) after the unpurified conductive polymer was purified by the cross flow manner in Example 1. The conductive polymer obtained in Comparative Example 3 had an area ratio (Y/X) of 3.00. That is, the proportion of low molecular weight bodies such as oligomers or monomers was high. In the conductive polymer solution, above 100 foreign materials were generated per mm² of a coating film at 1 week after forming the coating film. In addition, the surface resistivity of the coating film was significantly higher than that of each Example and conductivity was insufficient.

Comparative Example 4 is an example in which the conductive polymer solution obtained in Comparative Example 2 was desalted. The conductive polymer obtained in Comparative Example 4 had an area ratio (Y/X) of 3.00. That is, oligomers or monomers could not be removed by desalting. In addition, in the case of Comparative Example 4, basic compounds were removed by desalting. Therefore, the number of generation of foreign materials was small as compared with Comparative Example 2. The number of generation of foreign materials was, however, significantly great as compared with each Example. Further, the surface resistivity of the coating film was significantly high as compared with each Example and conductivity was insufficient.

### [Conductive polymer purified by membrane filtration]

### <Evaluation and measurement>

### (Calculation of area ratio (Y/X))

First, water (ultrapure water) and methanol were mixed so that water and methanol had a volume ratio of 8 : 2 to obtain a mixed solvent. Sodium carbonate and sodium hydrogen carbonate were added to the mixed solvent, so that sodium carbonate and sodium hydrogen carbonate had solid concentrations of 20 mmol/L and 30 mmol/L, respectively, to prepare an eluent. The resultant eluent had a pH of 10.8 at 25°C.

A test solution was prepared by dissolving a conductive polymer in the eluent so that the conductive polymer had a solid concentration of 0.1% by mass (step (I)).

A chromatogram on the resultant test solution was obtained by measuring molecular weight distribution using a polymer material evaluation equipment ("Waters Alliance 2695, 2414 (refractometer) and 2996 (PDA)" manufactured by Waters Corporation) (step (II)). The polymer material evaluation equipment is equipped with gel permeation chromatograph connecting with a photodiode array (PDA) detector.

Thereafter, retention times in the resultant chromatogram were converted into molecular weights (M) in terms of sodium polystyrene sulfonate (step (III)). Specifically, sodium polystyrene sulfonates with peak top molecular weights of 206, 1030, 4210, 13500, 33500, 78400, 158000 and 2350000 were used as standard samples. In the same way as for the test solution, each standard sample was dissolved in the eluent so that each of the standard samples had a solid concentration of 0.05% by mass to prepare a standard solution. In each standard solution, a relationship between the retention time and the molecular weight was determined by GPC to create a calibration curve. From the created calibration curve, the retention times in the chromatogram obtained in the step (II) were converted into the molecular weights (M) in terms of sodium polystyrene sulfonate.

The area (X) of a region with a molecular weight (M) of 5000 Da or more and the area (Y) of a region with that of below 5000 Da were each determined (step (IV)).

The area ratio (Y/X) between the area (X) and the area (Y) was determined (step (V)). The results are shown in Table 3.

### (Evaluation of conductivity)

The resultant conductive polymer solution was applied on a glass substrate using a spin coater ("manual spinner ASC-4000" manufactured by Actes Inc.). The glass substrate was heated at 100°C for 2 minutes on a hot plate to obtain a test piece in which a coating film was formed on the glass substrate. The coating film has a film thickness shown in Table 3.

A surface resistivity of the resultant test piece was measured by a resistivity meter ("Loresta GP" manufactured by Mitsubishi Chemical Analytech Co., Ltd.) equipped with an in-line four point probe. The results are shown in Table 3.

### [Example 15]

### <Production of conductive polymer>

134 kg of a 1 mol/L ammonium peroxydisulfate aqueous solution and 98% by mass concentrated sulfuric acid (26.8 mol) were added in a reactor, wherein the reactor is a 300 L stainless steel round-bottom stirring tank (tank diameter 0.6 m). The inside temperature of the reactor was adjusted to 0°C. Thereafter, 131 mol of 2-aminoanisole-4-sulfonic acid dissolved in 65 kg of a 4.5 mol/L triethylamine aqueous solution was added dropwise thereto over one hour. The stirring blade is a stainless steel anchor blade (stirring blade diameter 0.5 m). The stirring rotation speed was 45 rpm. After completion of the addition, the resultant mixture was stirred for 2 hours and aged for 12 hours to obtain a polymer solution.

### <Organic membrane filtration step>

The polymer solution obtained in the above production step of a conductive polymer was subjected to membrane filtration.

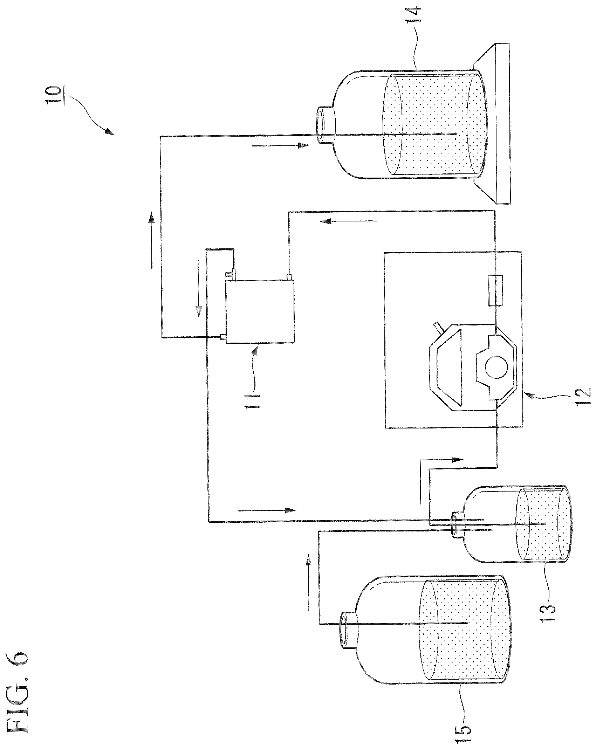

For the membrane filtration, a membrane filtration device 10 shown in Fig. 6 was used. The membrane filtration device 10 is a device adopting a cross flow mode, and is equipped with a filtration part 11, a pump 12, and three containers 13, 14 and 15.

As the filtration part 11, "Vivaflow 200" manufactured by Sartorius K.K. was used. As the filtration membrane, an ultrafiltration membrane with a molecular weight cutoff of 5000 Da (material: polyether sulfone (PES)) was used.

The container 13 is a container for housing the polymer solution and a filtrate which does not pass through the filtration membrane, the container 14 is a container for collecting a filtrate which passes through the filtration membrane (a permeation liquid), and the container 15 is a container for storing a diluent (e.g., water).

Using the membrane filtration device 10, the polymer solution was subjected to membrane filtration as follows.

That is, the pump 12 was operated, and the polymer solution housed in the container 13 was supplied to the filtration part 11. The filtrate which had passed through the filtration membrane of the filtration part 11 was collected into the container 14, while the filtrate which had not passed through the filtration membrane of the filtration part 11 was returned to the container 13. The filtrate returned to the container 13 was mixed with the polymer solution, and then the mixed solution was supplied to the filtration part 11 again and subjected to membrane filtration.

The membrane filtration was continuously carried out under conditions of a filtration pressure of 0.18 MPa and a filtration time of 420 minutes. The polymer solution supplied to the filtration part 11 was concentrated with the passage of time. Therefore, a diluent (water) stored in the container 15 was supplied to the container 13 to dilute the polymer solution to a desired concentration.

After completion of the membrane filtration, the solution in the container 13 was collected as a conductive polymer solution.

### <Evaluation>

### (Calculation of an area ratio (Y/X))

First, water (ultrapure water) and methanol were mixed so that water and methanol had a volume ratio of 8 : 2 to obtain a mixed solvent. To the mixed solvent, sodium carbonate and sodium hydrogen carbonate were added so that sodium carbonate and sodium hydrogen carbonate had solid concentrations of 20 mmol/L and 30 mmol/L, respectively, to prepare an eluent. The resultant eluent had a pH of 10.8 at 25°C.

A test solution was prepared by dissolving a conductive polymer in the eluent so that the conductive polymer had a solid concentration of 0.1% by mass (step (I)).

A chromatogram on the resultant test solution was obtained by measuring molecular weight distribution using a polymer material evaluation equipment ("Waters Alliance 2695, 2414 (refractometer) and 2996 (PDA)" manufactured by Waters Corporation) (step (II)). The polymer material evaluation equipment is equipped with gel permeation chromatograph connecting with a photodiode array (PDA) detector.

Thereafter, retention times in the resultant chromatogram were converted into molecular weights (M) in terms of sodium polystyrene sulfonate (step (III)). Specifically, sodium polystyrene sulfonates with peak top molecular weights of 206, 1030, 4210, 13500, 33500, 78400, 158000 and 2350000 were used as standard samples. In the same way as for the test solution, each standard sample was dissolved in the eluent so that each of the standard samples had a solid concentration of 0.05% by mass to prepare a standard solution. However, only a standard sample with a peak top molecular weight of 206 was dissolved in the eluent so that the standard sample had a solid concentration of 0.0025% by mass to prepare a standard solution. In each standard solution, a relationship between the retention time and the molecular weight was determined by GPC to create a calibration curve. From the created calibration curve, the retention times in the chromatogram obtained in the step (II) were converted into the molecular weights (M) in terms of sodium polystyrene sulfonate.

The area (X) of a region with a molecular weight (M) of 5000 Da or more and the area (Y) of a region with a molecular weight (M) of below 5000 Da were each determined (step (IV)).

The area ratio (Y/X) between the area (X) and the area (Y) was determined (step (V)). The results are shown in Table 3.

The conductive polymer of the present invention contains oligomers which are produced as by-products during the production process or unreacted monomers as impurities. The above area (Y) is the area of a region with a molecular weight (M) of below 5000 Da, and low molecular weight bodies such as oligomers or monomers mainly exist in the region. Therefore, the area ratio (Y/X) indicates an index of unreacted monomers or low molecular weight substances (oligomers). A smaller value of the area ratio indicates a small proportion of the low molecular bodies contained in the conductive polymer.

### (Evaluation of conductivity)

The resultant conductive polymer solution was applied on a glass substrate using a spin coater ("manual spinner ASC-4000" manufactured by Actes Inc.). The glass substrate was heated at 100°C for 2 minutes on a hot plate to obtain a test piece in which a coating film with a film thickness shown in Table 3 was formed on the glass substrate.

A surface resistivity of the resultant test piece was measured by a resistivity meter ("Loresta GP" manufactured by Mitsubishi Chemical Analytech Co., Ltd.) equipped with an in-line four point probe. The results are shown in Table 3.

### [Example 16]

A conductive polymer was obtained in the same manner as in Example 15 except that an ultrafiltration membrane with a molecular weight cutoff of 10000 Da was used as the filtration membrane and filtration pressure and filtration time were changed to those shown in Table 3. Various evaluations of the resultant conductive polymer were carried out. The results are shown in Table 3.

### [Example 17]

A conductive polymer was obtained in the same manner as in Example 15 except that a ceramic membrane was used for membrane filtration.

### <Inorganic membrane filtration step>

For the ceramic membrane filtration, the same membrane filtration device as shown in Fig. 6 was used, however, as the filtration membrane, "Membralox" (material: ceramic) manufactured by Nihon Pall Ltd. was used. This filtration membrane has a membrane pore diameter of 10 nm. This membrane is a cylindrical form with a length of 250 mm, a diameter of 10 mm and an inner diameter of 7 mm. The inside of the cylinder functions as an ultrafiltration membrane. The filtration part 11 is stainless steel housing having an external form as shown by 16, and a permeation liquid can be collected into the container 14.

Using the membrane filtration device, a polymer solution was subjected to membrane filtration in the same manner as in Example 15.

The membrane filtration was continuously carried out under conditions of a filtration pressure of 0.3 MPa and a filtration time of 746 minutes. Various evaluations of the resultant conductive polymer were carried out. The results are shown in Table 3.

### [Comparative Example 5]

A polymer solution was obtained in the same manner as in the step (a) of Example 15. This polymer solution was not subjected to membrane filtration and used as a conductive polymer, and various evaluations thereof were carried out.

The results are shown in Table 3.

**[Table 3]**

| | Conditions of membrane filtration | | | | | Evaluation of conductivity | | |
|---|---|---|---|---|---|---|---|---|
| | Molecular weight cutoff (Da) or membrane pore diameter (nm) | Filtration pressure (MPa) | Filtration time (min) | Membrane area (cm²) | Filtration time converted per unit membrane area (minute/10000 cm²) | Area ratio (Y/X) | Membrane pressure (µm) | Surface resistivity (Ω/sq.) |
| Example 15 | 5000 (Da) | 0.18 | 420 | 200 | 8.4 | 0.59 | 0.175 | 9×10⁵ |
| Example 16 | 10000 (Da) | 0.23 | 207 | 200 | 4.1 | 0.51 | 0.275 | 4×10⁵ |
| Example 17 | 10 (nm) | 0.30 | 746 | 110 | 8.2 | 0.41 | 0.10 | 1×10⁵ |
| Comparative Example 5 | - | - | - | - | - | 0.72 | 0.35 | 2×10⁷ |

As is apparent from Table 3, the area ratio (Y/X) values of the conductive polymers obtained in Examples 15 to 17 were 0.60 or less. The results showed that in the conductive polymers, unreacted monomers, low molecular weight substances (oligomers) were adequately removed.

In addition, the coating films formed from the conductive polymers had low surface resistivity and showed high conductivity.

In particular, in Example 16 in which the membrane filtration was carried out using an ultrafiltration membrane with a molecular weight cutoff of 10000 Da, the filtration time is shorter than that of Example 15. Nevertheless, the above area ratio (Y/X) value was lower and the surface resistivity of the coating film was further decreased. That is, in Example 16, more unreacted monomers, oligomers were removed as compared with Example 15. Accordingly, it was shown that the conductive polymer with higher conductivity was obtained.

In addition, in Example 17 in which the membrane filtration was carried out by ceramic membrane filtration, filtration efficiency (filtration time converted per unit membrane area) was almost the same as that in Example 15. In Example 17, however, the above area ratio (Y/X) value was lower than those of Examples 15 and 16 and the surface resistivity of the coating film was further lowered. That is, the filtration could be carried out more efficiently. Consequently, it was shown that the conductive polymer with high conductivity was obtained.

On the other hand, in Comparative Example 5 in which the polymer solution was not subjected to membrane filtration, the above area ratio (Y/X) value was as high as 0.72. That is, in Comparative Example 5, many unreacted monomers, or oligomers were contained in the polymer solution.

The coating film formed from the polymer solution had a high surface resistivity as compared with Examples 15 to 17 and conductivity was insufficient.

### [Conductive polymer purified by ion exchange method]

### <Measurement method>

### (Measurement of residual oligomers and residual monomers)

The mass average molecular weight of the conductive polymer was measured by GPC, and was determined in terms of sodium polystyrene sulfonate from a calibration curve of a standard sample. The chromatograms at a wavelength of 254 nm were compared as follows. A UV detector was used as a detector.

Comparison of the chromatograms will be described below by way of the chromatogram shown in Fig. 1.

First, the mass average molecular weight of the conductive polymer solution before purification by a strongly basic anion exchange resin was measured by GPC to obtain a chromatogram at a wavelength of 254 nm. In the chromatogram shown in Fig. 1, the ordinate is absorbance and the abscissa is retention time. Further, a peak 1 shows a peak derived from a polymer (conductive polymer), a peak 2 shows a peak derived from an oligomer and the peak 3 shows a peak derived from a monomer.

On the resultant chromatogram, the base line X of all detection peaks was drawn to determine all peak areas. This was considered as the whole peak area.

The base line Y of the peak 2 (a line linking two low points of the peak 2) was drawn to determine an oligomer peak area (y). The area rate (y1) of the oligomer peak area (y) to the whole peak area was determined.

The base line Z of the peak 3 (a line linking two low points of the peak 3) was drawn to determine a monomer peak area (z). The area rate (z1) of the monomer peak area (z) to the whole peak area was determined.

With respect to the conductive polymer solution after purification, the mass average molecular weight thereof was then measured in the same manner. The area rate (y2) of the oligomer peak area and the area rate (z2) of the monomer peak area to the whole peak area were determined from the resultant chromatogram.

Assuming that the area rates (y1) and (z1) were 100, the proportions of the area rates (y2) and (z2) were calculated. These were regarded as the proportions of residual oligomers and residual monomers in the conductive polymer after purification.

### (Measurement of surface resistivity)

On a glass substrate with 5 cm × 5 cm, the conductive polymer solution was applied by spin coating (2000 rpm × 60 sec). The glass substrate was heated at 100°C for 2 minutes on a hot plate to obtain a test piece in which a coating film with a thickness of 0.1 µm was formed on the glass substrate.

A surface resistivity (an initial value) of the resultant test piece was measured by a resistivity meter ("Loresta GP" manufactured by Mitsubishi Chemical Analytech Co., Ltd.) equipped with an in-line four point probe.

### <Polymerization of conductive polymer>

1 mol of 2-aminoanisole-4-sulfonic acid was dissolved in 300 mL of a solution of 4 mol/L triethylamine in water/acetonitrile (3 : 7) at 0°C to obtain a monomer solution.

Separately, 1 mol of ammonium peroxydisulfate was dissolved in 1 L of a solution of water/acetonitrile(3 : 7) to obtain an oxidizing agent solution.

While cooling the oxidizing agent solution to 5°C, the monomer solution was then added dropwise thereto. After completion of the addition, the resultant mixture was further stirred at 25°C for 12 hours, and a reaction product was then collected by filtration using a centrifugal filter. The reaction product was further washed with methanol and was dried to obtain a polymer (unpurified conductive polymer) powder in an amount of about 185 g.

### [Example 18]

2 parts by mass of the resultant polymer (unpurified conductive polymer) obtained in advance was dissolved in 98 parts by mass of water at room temperature to obtain an aqueous solution. 10 parts by mass of a strongly anion exchange resin ("ORLITE DS-2" manufactured by Organo Corporation) was added to 100 parts by mass of the aqueous solution, The mixture was rotated at a rotation speed of 50 rpm at room temperature for one hour using a variable mix rotor (VMR-3R). Thus, the unpurified conductive polymer was purified.

Thereafter, the mixed liquid was filtered with a filter to remove the strongly anion exchange resin. Thus, a conductive polymer solution 3A-1 was obtained.

With respect to the resultant conductive polymer solution 3A-1, the proportions of residual oligomers and residual monomers in the conductive polymer were determined and a surface resistivity was measured. The results are shown in Table 4.

The "room temperature" indicates 25°C.

### [Example 19]

An acidic cation exchange resin ("Amberlite IR-120H" manufactured by Organo Corporation) was filled into a column so that the acidic cation exchange resin would be 10 parts by mass per 100 parts by mass of the conductive polymer solution 3A-1 obtained in Example 18. The conductive polymer solution 3A-1 was passed through the column at a speed of SV = 5 to desalt the solution. Thus, a conductive polymer solution 3A-2 was obtained.

With respect to the resultant conductive polymer solution 3A-2, the proportions of residual oligomers and residual monomers in the conductive polymer were determined, and a surface resistivity was measured. The results are shown in Table 4.

### [Comparative Example 6]

2 parts by mass of the resultant polymer (unpurified conductive polymer) obtained in advance was dissolved in 98 parts by mass of water at room temperature to obtain an aqueous solution. This aqueous solution was used as a conductive polymer solution 3B-1.

The surface resistivity of the conductive polymer solution 3B-1 was measured. The result is shown in Table 4.

In Comparative Example 6, the proportions of residual oligomers and residual monomers in the conductive polymer are each 100.

### [Comparative Example 7]

A unpurified conductive polymer was purified in the same manner as in Example 17 except that a weakly basic anion exchange resin ("DIAION WA20" manufactured by Mitsubishi Chemical Corporation) was used in place of the strongly basic anion exchange resin. Thus, a conductive polymer solution 3C-1 was obtained.

With respect to the conductive polymer solution 3C-1, the proportions of residual oligomers and residual monomers in the conductive polymer were determined and a surface resistivity was measured. The results are shown in Table 4.

**[Table 4]**

| | Proportion of residual oligomers | Proportion of residual monomers | Surface resistivity (Ω/sq.) |
|---|---|---|---|
| Example 18 | 56 | ≤ 0.01 | 2×10⁶ |
| Example 19 | 56 | ≤ 0.01 | 1×10⁵ |
| Comparative Example 6 | 100 | 100 | 7×10⁶ |
| Comparative Example 7 | 87 | 38 | 6×10⁶ |

As is apparent from Table 4, in each Example, the proportions of residual oligomers and residual monomers in the conductive polymer are low. That is, oligomers and monomers could be adequately removed.

In addition, the coating films formed from the conductive polymer solutions had low surface resistivity and showed high conductivity. In particular, in the case of Example 19 in which after purification of the unpurified conductive polymer, ion exchange was further carried out by an acidic cation exchange resin, the surface resistivity was further decreased and higher conductivity could be exerted.

On the other hand, in the conductive polymer solution obtained in Comparative Example 6 in which the unpurified conductive polymer was not purified, more oligomers and monomers were contained as compared with each Example. In addition, the surface resistivity of the coating film was higher than that of each Example and conductivity was insufficient.

In Comparative Example 7 in which the unpurified conductive polymer was purified using a weakly basic anion exchange resin, oligomers or monomers could be removed as compared with Comparative Example 6, but it was insufficient as compared with each Example. The surface resistivity of the coating film was higher than that of each Example and conductivity was insufficient.

### [Conductive polymer purified by carbon material]

### <Measurement method>

### (Measurement of residual oligomers and residual monomers)

The mass average molecular weight of the conductive polymer was measured by GPC, and was determined in terms of sodium polystyrene sulfonate from a calibration curve of a standard sample. The chromatograms at a wavelength of 254 nm were compared as follows. A UV detector was used as a detector.

Comparison of the chromatograms will be described below by way of the chromatogram shown in Fig. 1.

First, the mass average molecular weight of the conductive polymer solution before purification by a carbon material was measured by GPC to obtain a chromatogram at a wavelength of 254 nm. In the chromatogram shown in Fig. 1, the ordinate is absorbance and the abscissa is retention time. Further, a peak 1 shows a peak derived from a polymer (conductive polymer), a peak 2 shows a peak derived from an oligomer and the peak 3 shows a peak derived from a monomer.

On the resultant chromatogram, the base line X of all detection peaks was drawn to determine all peak areas. This was considered as the whole peak area.

The base line Y of the peak 2 (a line linking two low points of the peak 2) was drawn to determine an oligomer peak area (y). The area rate (y1) of the oligomer peak area (y) to the whole peak area was determined.

The base line Z of the peak 3 (a line linking two low points of the peak 3) was drawn to determine a monomer peak area (z). The area rate (z1) of the monomer peak area (z) to the whole peak area was determined.

With respect to the conductive polymer solution after purification, the mass average molecular weight thereof was then measured in the same manner. The area rate (y2) of the oligomer peak area and the area rate (z2) of the monomer peak area to the whole peak area were determined from the resultant chromatogram.

Assuming that the area rates (y1) and (z1) were 100, the proportions of the area rates (y2) and (z2) were calculated. These were regarded as the proportions of residual oligomers and residual monomers in the conductive polymer after purification.

### (Measurement of surface resistivity)

On a glass substrate with 5 cm × 5 cm, the conductive polymer solution was applied by spin coating (2000 rpm × 60 sec). The glass substrate was heated at 100°C for 2 minutes on a hot plate to obtain a test piece in which a coating film with a thickness of 0.1 µm was formed on the glass substrate.

A surface resistivity (an initial value) of the resultant test piece was measured by a resistivity meter ("Loresta GP" manufactured by Mitsubishi Chemical Analytech Co., Ltd.) equipped with an in-line four point probe.

### <Polymerization of conductive polymer>

1 mol of 2-aminoanisole-4-sulfonic acid was dissolved in 300 mL of a solution of 4 mol/L triethylamine in water/acetonitrile (3 : 7) at 0°C to obtain a monomer solution.

Separately, 1 mol of ammonium peroxydisulfate was dissolved in 1 L of a solution of water/acetonitrile(3 : 7) to obtain an oxidizing agent solution.

While cooling the oxidizing agent solution to 5°C, the monomer solution was then added dropwise thereto. After completion of the addition, the resultant mixture was further stirred at 25°C for 12 hours, and a reaction product was then collected by filtration using a centrifugal filter. The reaction product was further washed with methanol and was dried, and thus a polymer (unpurified conductive polymer) powder in an amount of about 185 g was obtained.

### [Example 20]

1 part by mass of the resultant polymer (unpurified conductive polymer) obtained in advance was dissolved in 99 parts by mass of water at room temperature to obtain an aqueous solution. 1 part by mass of activated carbon (Seisei Shirasagi manufactured by Japan EnviroChemicals, Ltd.) was added to 100 parts by mass of the aqueous solution. Thereafter, the mixture was left at room temperature for half a day to purify the unpurified conductive polymer.

Thereafter, the mixed liquid was filtered with a filter to remove the activated carbon. Thus, a conductive polymer solution 4A-1 was obtained.

With respect to the resultant conductive polymer solution 4A-1, the proportions of residual oligomers and residual monomers in the conductive polymer were determined and a surface resistivity was measured. The results are shown in Table 5.

The "room temperature" indicates 25°C.

### [Example 21]

1 part by mass of the resultant polymer (unpurified conductive polymer) obtained in advance was dissolved in 99 parts by mass of water at room temperature to obtain an aqueous solution. 1 part by mass of a multi-walled carbon nanotube (VGCF-X manufactured by Showa Denko K.K.) was added to 100 parts by mass of the aqueous solution,. Thereafter, the mixture was left at room temperature for half a day to purify the unpurified conductive polymer. Thereafter, the mixed liquid was filtered with a filter to remove the multi-walled carbon nanotube. Thus, a conductive polymer solution 4A-2 was obtained.

With respect to the resultant conductive polymer solution 4A-2, the proportions of residual oligomers and residual monomers in the conductive polymer were determined and a surface resistivity was measured. The results are shown in Table 5.

The "room temperature" indicates 25°C.

### [Comparative Example 8]

1 part by mass of the resultant polymer (unpurified conductive polymer) obtained in advance was dissolved in 99 parts by mass of water at room temperature to obtain an aqueous solution. The aqueous solution was used as a conductive polymer solution 4B-1.

The surface resistivity of the conductive polymer solution 4B-1 was measured. The result is shown in Table 5. In Comparative Example 8, the proportions of residual oligomers and residual monomers in the conductive polymer are each 100.

**[Table 5]**

| | Execution of purification | Proportion of residual oligomers* | Proportion of residual monomers* | Surface resistivity (Ω/sq.) |
|---|---|---|---|---|
| Example 20 | Yes (activated carbon) | 15 | 4 | 2.2×10⁶ |
| Example 21 | Yes (CNT) | 54 | 15 | 2.5×10⁶ |
| Comparative Example 8 | No | 100 | 100 | 4.1×10⁶ |

| | | | | |
|---|---|---|---|---|
| * Calculated as Comparative Example 8 being taken as 100 | | | | |

As is apparent from Table 5, in each Example, the proportions of residual oligomers and residual monomers in the conductive polymer were low. That is, in each Example, oligomers and monomers could be adequately removed.

In addition, the coating film formed from the conductive polymer solution of each Example had a low surface resistivity and showed high conductivity.

On the other hand, in the conductive polymer solution obtained from the unpurified conductive polymer (Comparative Example 8), more oligomers and monomers were contained as compared with each Example. Therefore, the surface resistivity of the coating film formed from the conductive polymer solution in Comparative Example 8 was higher than that of each Example and conductivity was insufficient.

### INDUSTRIAL APPLICABILITY

The present invention provides a conductive polymer in which, when being formed into a coating film, foreign materials are difficult to be generated even the passage of time and a quality control method for a conductive polymer. In addition, the present invention provides a purification method in order to obtain a conductive polymer having high conductivity and solubility.

### DESCRIPTION OF REFERENCE SIGNS

1: polymer peak
2: oligomer peak
3: monomer peak
X, Y, Z: base line
y: oligomer peak area
z: monomer peak area
10: membrane filtration device
11: filter part
12: pump
13, 14, 15: container
16: filter part (stainless steel housing)
17: ceramic membrane

## Claims

1. A conductive polymer including a repeating unit which is represented by the following general formula (1), the content of the repeating unit of formula (1) being 50 to 100 mol%, based on all repeating units of the conductive polymer, and including an area ratio (Y/X) of 0.60 or less, which area ratio is calculated by an evaluation method comprising the following steps (I) to (VI):
(I) a step of preparing a test solution by dissolving a conductive polymer in an eluent which is prepared to have a pH of 10 or more so that the conductive polymer has a solid concentration of 0.1% by mass;
(II) a step of obtaining a chromatogram on the test solution by measuring molecular weight distribution using a polymer material evaluation equipment equipped with gel permeation chromatograph;
(III) a step of converting retention times in the chromatogram obtained in the step (II) into molecular weights (M) in terms of sodium polystyrene sulfonate;
(IV) a step of determining the area (X) of a region with a molecular weight (M) of 5000 Da or more, which molecular weight (M) is converted in terms of sodium polystyrene sulfonate;
(V) a step of determining the area (Y) of a region with a molecular weight (M) of below 5000 Da, which molecular weight (M) is converted in terms of sodium polystyrene sulfonate; and
(VI) a step of determining the area ratio (Y/X) between the area (X) and the area (Y): 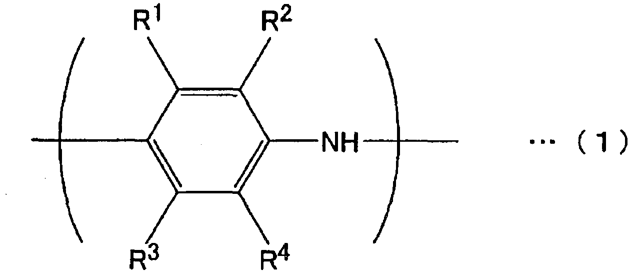 in the formula (1), one of R¹ to R⁴ is a linear or branched alkoxy group having 1 to 4 carbon atoms, one of the others is -SO₃⁻ or -SO₃H, and the rest is H.

## Patentansprüche

1. Leitfähiges Polymer, das eine Wiederholungseinheit, dargestellt durch die folgende allgemeine Formel (1), enthält, wobei der Gehalt der Wiederholungseinheit der Formel (1) 50 bis 100 Mol-%, bezogen auf alle Wiederholungseinheiten des leitfähigen Polymers, beträgt und das ein Flächenverhältnis (Y/X) von 0,60 oder weniger aufweist, wobei das Flächenverhältnis durch ein Bewertungsverfahren berechnet wird, das die folgenden Schritte (I) bis (VI) umfasst:
(I) einen Schritt des Herstellens einer Testlösung durch Auflösen eines leitfähigen Polymers in einem Eluenten, der so hergestellt wird, dass er einen pH-Wert von 10 oder mehr aufweist, so dass das leitfähige Polymer eine Feststoffkonzentration von 0,1 Massen-% aufweist;
(II) einen Schritt des Erhaltens eines Chromatogramms der Testlösung durch Messen der Molekulargewichtsverteilung unter Verwendung einer mit einem Gelpermeationschromatographen ausgestatteten Polymermaterialbewertungsausrüstung;
(III) einen Schritt des Umwandelns der Retentionszeiten in dem in Schritt (II) erhaltenen Chromatogramm in Molekulargewichte (M) in Form von Natriumpolystyrolsulfonat;
(IV) einen Schritt des Bestimmens der Fläche (X) eines Bereichs mit einem Molekulargewicht (M) von 5000 Da oder mehr, wobei das Molekulargewicht (M) in Form von Natriumpolystyrolsulfonat umgewandelt wird;
(V) einen Schritt des Bestimmens der Fläche (Y) eines Bereichs mit einem Molekulargewicht (M) von weniger als 5000 Da, wobei das Molekulargewicht (M) in Form von Natriumpolystyrolsulfonat umgewandelt wird; und
(VI) einen Schritt des Bestimmens des Flächenverhältnisses (Y/X) zwischen der Fläche (X) und der Fläche (Y): 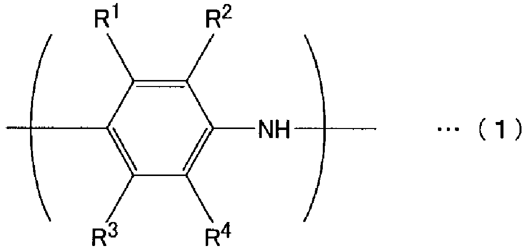 wobei, in der Formel (1), eines von R¹ bis R⁴ eine lineare oder verzweigte Alkoxygruppe mit 1 bis 4 Kohlenstoffatomen ist, eines der anderen -SO₃⁻ oder -SO₃H ist und der Rest H ist.

## Revendications

1. Polymère conducteur incluant un motif répétitif qui est représentée par la formule générale (1) suivante, la teneur en motif répétitif de formule (1) étant de 50 à 100% en mole, sur la base de tous les motifs répétitifs du polymère conducteur, et incluant un rapport de surface (Y/X) de 0,60 ou moins, lequel rapport de surface est calculé par un procédé d'évaluation comprenant les étapes (I) à (VI) suivantes :
(I) une étape de préparation d'une solution d'essai en dissolvant un polymère conducteur dans un éluant qui est préparé pour avoir un pH de 10 ou plus de sorte que le polymère conducteur présente une concentration en solide de 0,1 % en masse ;
(II) une étape d'obtention d'un chromatogramme sur la solution d'essai en mesurant la répartition des poids moléculaires au moyen d'un équipement d'évaluation de matériau polymère équipé d'un chromatographe à perméation sur gel ;
(III) une étape de conversion des temps de rétention du chromatogramme obtenu dans l'étape (II) en poids moléculaires (M) en termes de polystyrène sulfonate de sodium ;
(IV) une étape de détermination de la surface (X) d'une région ayant un poids moléculaire (M) de 5000 Da ou plus, lequel poids moléculaire (M) est converti en termes de polystyrène sulfonate de sodium ;
(V) une étape de détermination de la surface (Y) d'une région ayant un poids moléculaire (M) inférieur à 5000 Da, lequel poids moléculaire (M) est converti en termes de polystyrène sulfonate de sodium ; et
(VI) une étape de détermination du rapport de surface (Y/X) entre la surface (X) et la surface (Y) : 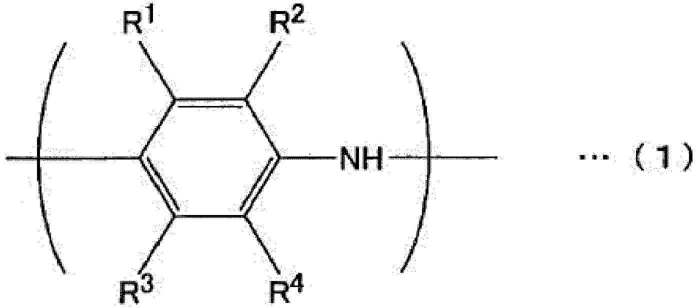 dans la formule (1), l'un parmi R¹ à R⁴ est un groupe alcoxy linéaire ou ramifié présentant 1 à 4 atomes de carbone, l'un des autres est -SO₃⁻ ou -SO₃H, et le reste est H.
